# EUROPEAN PATENT APPLICATION

(11) **EP 3 944 115 A1**
(43) Date of publication of application: **26.01.2022**
(21) Application number: 21176830.4
(22) Date of filing: 31.05.2021
(51) Int. Cl.: G06F 21/64, H04L 9/08, H04L 29/06, H04L 9/32

(54) **INFORMATION PROCESSING PROGRAM, INFORMATION PROCESSING METHOD, AND INFORMATION PROCESSING APPARATUS**

(30) Priority: 22.07.2020 JP 2020125018
(71) Applicant: FUJITSU LIMITED, Kanagawa 211-8588 (JP)
(72) Inventor: Ota, Ikuko, Kawasaki-shi, Kanagawa, 211-8588 (JP); Kobayashi, Masafumi, Kawasaki-shi, Kanagawa, 211-8588 (JP); Li, Hangyu, Kawasaki-shi, Kanagawa, 211-8588 (JP); Yoshihara, Yasuhiro, Kawasaki-shi, Kanagawa, 211-8588 (JP)
(74) Representative: Hoffmann Eitle

(57) **Abstract**

An information processing program in which a computer performs processing of, when a first event has occurred, registering a first transaction corresponding to the first event which is generated in a blockchain, generating transaction management information in which identification information for identifying the first transaction and first key information are associated, generating trace forward information indicating a parent-child relationship of each transaction based on the first key information, when a second key information of a second event to be modified and modification content are received, registering a second transaction corresponding to the modification content in the blockchain, specifying first identification information indicating identification information corresponding to the second key information based on the second key information and the transaction management information, and generating a modification history in which second identification information indicating identification information of the second transaction corresponding to the modification content and the first identification information are associated.

## Description

### [Field]

The embodiments discussed herein are related to an information processing program and the like.

### [Background Art]

Conventionally, various services have been provided using blockchains. A blockchain is a database that stores data by generating units of data called blocks and concatenating the blocks in order of generating the blocks.

There is a smart contract as a technology related to contracts using a blockchain. By making a contract on the basis of the smart contract, deals between contracted users can be automated. Deal information between the users is registered in a block of the blockchain as a transaction. In the case of using a blockchain for such an application, a mechanism for guaranteeing that the blockchain has not been tampered with is needed.

There is a related technology for calculating a hash value regarding predetermined data and determining whether the calculated hash value matches a digest recorded in a blockchain in a case of receiving a reference request for the predetermined data for the purpose of detecting tampering of the blockchain. When the hash value matches the digest, it means that the blockchain has not been tampered with.

Here, known registration processing of registering deal information as a transaction in a blockchain when users make a deal will be described.

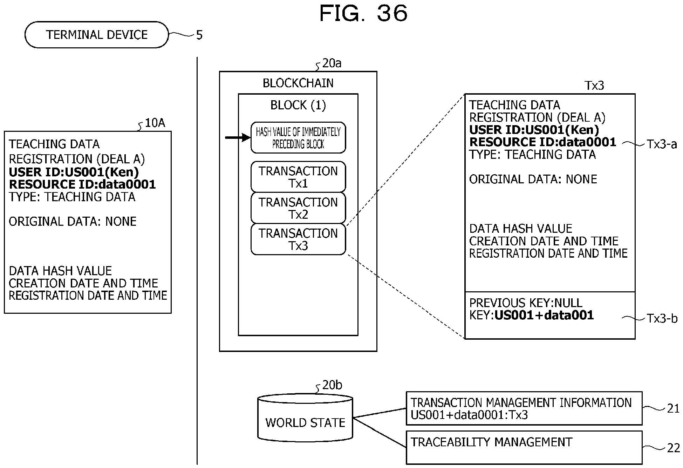

FIGs. 36 to 38 are diagrams for describing known registration processing. Here, it is assumed that each user operates terminal devices to access a device of a related technology and performs a deal A, a deal B, and a deal C in order. In the following description, the device of a related technology will be simply referred to as a "device".

FIG. 36 will be described. In the case where the user (Ken) performs the "deal A", a screen 10A is displayed on the terminal device. For example, the deal A is a deal for registering teaching data to be used in deep learning. The user (Ken) refers to the screen 10A, operates the terminal device, and inputs a user ID "US001" and a resource ID "data0001". The user ID represents information that uniquely identifies the user (Ken). The resource ID is information that uniquely identifies the teaching data.

The device has a blockchain 20a, and the blockchain 20a is separated from a world state 20b. The blockchain 20a includes a block (1). It is assumed that a hash value of an immediately preceding block (not illustrated) and transactions Tx1 and Tx2 are already registered in the block (1). When receiving input of information regarding the deal A from the terminal device, the device generates a transaction Tx3. In a case where the transactions to be registered in the block (1) are accumulated, the device registers each of the transactions in the block (1).

The transaction Tx3 includes a region Tx3-a and a region Tx3-b that are separated from each other. The device registers the user ID "US001" and the resource ID "data0001" input on the screen 10A in the region Tx3-a. The device registers a previous key "NULL" in the region Tx3-b because the "deal A" is the first deal. The device registers a key "US001 + data0001", which is a combination of the user ID "US001" and the resource ID "data0001" input on the screen 10A, in the region Tx3-b. The key "US001 + data0001" in the region Tx3-b can be said to be deal information that can identify the deal target and the user who has performed the deal.

The device has the world state 20b, and the world state 20b has transaction management information 21 and traceability information 22. The transaction management information 21 is information that associates a deal key with a transaction ID in which deal information is recorded. For example, the key of the deal A is information "US001 + data0001" that is a combination of the user ID "US001" and the resource ID "data0001" input on the screen 10A. Since the information of the deal A is registered in a blockchain 140a as the transaction Tx3, the device registers a record in which "US001 + data0001" and "Tx3" are associated in the transaction management information 21.

The traceability information 22 holds information of a parent-child relationship of transactions. As for the deal A, there is no information of a reference source deal, so nothing is registered in the traceability information 22.

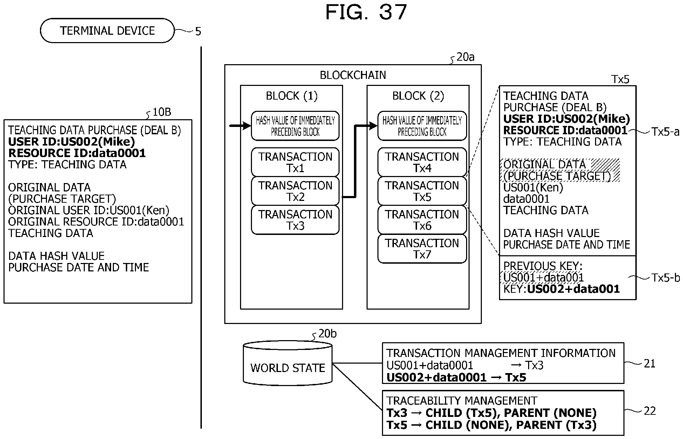

Description of FIG. 37 will be made. For example, in the blockchain 20a, the device connects a block (2) to the block (1) and registers the hash value of the block (1) in the block (2). Furthermore, it is assumed that a transaction Tx4 is registered in the block (2). By registering the hash value of block (1) in the block (2), tampering with the transactions Tx1 to Tx3 in the block (1) is suppressed.

In the case where the user (Mike) performs the "deal B", a screen 10B is displayed on the terminal device. For example, the deal B is assumed to be a deal for purchasing the teaching data registered in the deal A. The user (Mike) refers to the screen 10B, operates the terminal device, and inputs a user ID "US002" and the resource ID "data0001".

Furthermore, the user (Mike) inputs information of original data to be purchased on the screen 10B. The information of original data includes an original user ID that uniquely identifies the user corresponding to the original data and an original resource ID that uniquely identifies the original data. In the case where the user (Mike) purchases the teaching data registered in the deal A, the user (Mike) inputs the original user ID "US001" and the original resource ID "data0001" on the screen 10B.

When receiving input of information regarding the deal B from the terminal device, the device generates a transaction Tx5 and registers the transaction Tx5 in the block (2). The transaction Tx5 includes a region Tx5-a and a region Tx5-b. The device registers the user ID "US002" and the resource ID "data0001" input on the screen 10B in the region Tx5-a. Furthermore, the device registers the original user ID "US001" and the original resource ID "data0001" input on the screen 10B in the region Tx5-a.

The device generates a key "US001 + data0001" that is a combination of the original user ID "US001" and the original resource ID "data0001" of the screen 10B, and registers the generated key in the previous key of the region Tx5-b. Furthermore, the device registers a key "US002 + data0001" that is a combination of the user ID "US002" and the resource ID "data0001" of the screen 10B in the key of the region Tx5-b.

The device registers the information of the deal B in association with the transaction in which the information of the deal B is recorded in the transaction management information 21. The information of the deal B is information "US002 + data0001" that is a combination of the user ID "US002" and the resource ID "data0001" input on the screen 10B. Since the information of the deal B is registered in the blockchain 140a as the transaction Tx5, the device registers a record in which "US002 + data0001" and "Tx5" are associated in the transaction management information 21.

Since a parent-child relationship is made between the transaction Tx3 and the transaction Tx5, the device registers the parent-child relationship in the traceability information 22. The device registers the fact that the child of the transaction Tx3 is the transaction Tx5 and the transaction Tx3 has no parent in the traceability information 22. The device registers the fact that the transaction Tx5 has no children and the parent of the transaction Tx5 is the transaction Tx3 in the traceability information 22.

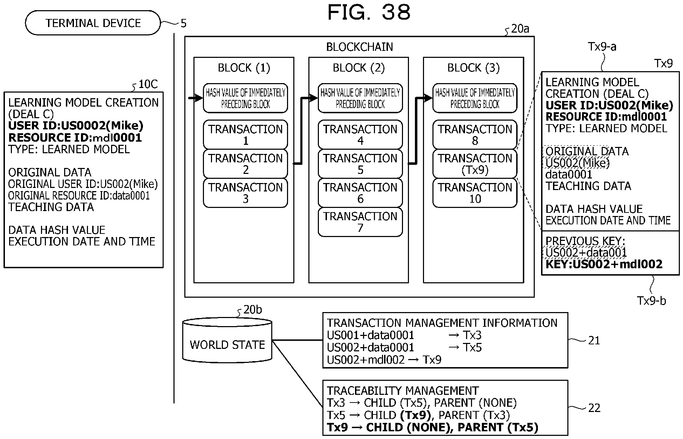

Description of FIG. 38 will be made. For example, in the blockchain 20a, the device connects a block (3) to the block (2) and registers the hash value of the block (2) in the block (3). By registering the hash value of block (2) in the block (3), tampering with transactions Tx4 to Tx7 in the block (2) is suppressed.

In the case where the user (Mike) performs the "deal C", a screen 10C is displayed on the terminal device. For example, the deal C is a deal for generating a learning model using the teaching data purchased in the deal B. The user (Mike) refers to the screen 10C, operates the terminal device, and inputs the user ID "US002" and a resource ID "mdl0001". The resource ID "mdl0001" is information that uniquely identifies the learning model.

Furthermore, the user (Mike) inputs the information of the original data used in the learning of the learning model to the screen 10C. In the case of using the teaching data purchased in the deal B, the user (Mike) operates the terminal device and inputs the original user ID "US002" and the original resource ID "data0001" to the screen 10C.

When receiving input of information regarding the deal C from the terminal device, the device generates a transaction Tx9 and registers the transaction Tx9 in the block (3). The transaction Tx9 includes a region Tx9-a and a region Tx9-b. The device registers the user ID "US002" and the resource ID °mdl0001" input on the screen 10C in the region Tx9-a. The device registers the original user ID "US001" and the original resource ID "data0001" input on the screen 10C in the region Tx9-a.

The device generates a key "US002 + data0001" that is a combination of the original user ID "US002" and the original resource ID "data0001" of the screen 10C, and registers the generated key in the previous key of the region Tx9-b. Furthermore, the device registers a key "US002 + mdl0001" that is a combination of the user ID "US002" and the resource ID "mdl0001" of the screen 10C in the key of the region Tx9-b.

The device registers the information of the deal C in association with the transaction in which the information of the deal C is recorded in the transaction management information 21. The information of the deal C is information "US002 + mdl0001" that is a combination of the user ID "US002" and the resource ID "mdl0001" input on the screen 10C. Since the information of the deal C is registered in the blockchain 20a as the transaction Tx9, the device registers a record in which "US002 + mdl0001" and "Tx9" are associated in the transaction management information 21.

Since a parent-child relationship is made between the transaction Tx5 and the transaction Tx9, the device registers the parent-child relationship in the traceability information 22. The device registers the fact that the child of the transaction Tx5 is the transaction Tx9 and the parent of the transaction Tx5 is the transaction Tx3 in the traceability information 22. The device registers the fact that the transaction Tx9 has no children and the parent of the transaction Tx9 is the transaction Tx5 in the traceability information 22.

Here, the transaction registered in the blockchain has high data reliability, but is inefficient in a case of chasing the transaction itself and acquiring related data. However, as described in FIGs. 36 to 38, by registering the transaction management information 21 and the traceability information 22 in the world state 20b, the related data can be acquired without chasing the transaction itself.

### [Citation List]

### [Patent Literature]

[PTL 1] Japanese Laid-open Patent Publication No. 2019-211821
[PTL 2] Japanese Laid-open Patent Publication No. 2019-160312 are disclosed as related art.

### [Summary of Invention]

### [Technical Problem]

In the related technology described in FIGs. 36 to 38, the reliability of the transaction management information 21 and the traceability information 22 registered in the world state 20b has a problem, and it is difficult to acquire the related data while ensuring the reliability. Furthermore, the related technology has a problem of not being capable of modifying the blockchain 20a and the world state 20b while ensuring the reliability and not being capable of efficiently referring to a modification history and data in the case of modifying the deal information registered in the blockchain 20a.

In one aspect, an object of the present embodiment is to provide an information processing program, an information processing method, and an information processing device capable of efficiently referring to a modification history and data even in a case where deal information registered in a blockchain has been modified.

### [Solution to Problem]

In one aspect of embodiment, a computer performs following processing. The computer generates, when a first event has occurred, a first transaction corresponding to the first event, registers the generated first transaction in a blockchain. The computer generates transaction management information in which identification information for identifying the first transaction and first key information of the first event are associated. The computer generates trace forward information indicating a parent-child relationship of each transaction based on the first key information of the first event. The computer generates, when a second key information of a second event to be modified and modification content are received, a second transaction corresponding to the modification content and registers the generated second transaction in the blockchain. The computer specifies first identification information indicating identification information corresponding to the second key information of the second event to be modified based on the second key information of the second event to be modified and the transaction management information. The computer generates a modification history in which second identification information indicating identification information of the second transaction corresponding to the modification content and the first identification information are associated.

### [Effects of Invention]

The modification history and data can be efficiently referred even in the case where the deal information registered in the blockchain has been modified.

### [Brief Description of Drawings]

FIG. 1 is a diagram (1) for describing registration processing of a reference technology;
FIG. 2 is a diagram (2) for describing registration processing of a reference technology;
FIG. 3 is a diagram (3) for describing registration processing of a reference technology;
FIG. 4 is a diagram (4) for describing registration processing of a reference technology;
FIG. 5 is a diagram for describing a problem in the reference technology;
FIG. 6 is a diagram (1) for describing processing of modifying content of a deal by an information processing device according to the present embodiment;
FIG. 7 is a diagram (2) for describing the processing of modifying content of a deal by the information processing device according to the present embodiment;
FIG. 8 is a diagram (3) for describing the processing of modifying content of a deal by the information processing device according to the present embodiment;
FIG. 9 is a diagram (4) for describing the processing of modifying content of a deal by the information processing device according to the present embodiment;
FIG. 10 is a diagram (1) for describing trace forward executed by the information processing device according to the present embodiment;
FIG. 11 is a diagram (2) for describing trace forward executed by the information processing device according to the present embodiment;
FIG. 12 is a diagram (3) for describing trace forward executed by the information processing device according to the present embodiment;
FIG. 13 is a diagram (1) for describing traceback executed by the information processing device according to the present embodiment;
FIG. 14 is a diagram (2) for describing traceback executed by the information processing device according to the present embodiment;
FIG. 15 is a diagram (3) for describing traceback executed by the information processing device according to the present embodiment;
FIG. 16 is a diagram (1) for describing processing of canceling a deal by the information processing device according to the present embodiment;
FIG. 17 is a diagram (2) for describing processing of canceling a deal by the information processing device according to the present embodiment;
FIG. 18 is a diagram (3) for describing processing of canceling a deal by the information processing device according to the present embodiment;
FIG. 19 is a diagram (4) for describing trace forward executed by the information processing device according to the present embodiment;
FIG. 20 is a diagram (5) for describing trace forward executed by the information processing device according to the present embodiment;
FIG. 21 is a diagram (6) for describing trace forward executed by the information processing device according to the present embodiment;
FIG. 22 is a diagram (1) for describing traceback executed by the information processing device according to the present embodiment;
FIG. 23 is a diagram (2) for describing traceback executed by the information processing device according to the present embodiment;
FIG. 24 is a diagram illustrating a configuration of a system according to the present embodiment;
FIG. 25 is a functional block diagram illustrating a configuration of the information processing device according to the present embodiment;
FIG. 26 is a diagram illustrating an example of a data structure of a blockchain;
FIG. 27 is a diagram illustrating an example of a data structure of trace forward information;
FIG. 28 is a diagram illustrating an example of a data structure of transaction management information;
FIG. 29 is a diagram illustrating an example of a data structure of a modification history;
FIG. 30 is a flowchart illustrating registration processing executed by the information processing device according to the present embodiment;
FIG. 31 is a flowchart illustrating a processing procedure when the information processing device according to the present embodiment receives information of a deal to be modified;
FIG. 32 is a flowchart illustrating a processing procedure when the information processing device according to the present embodiment receives information of a deal to be deleted;
FIG. 33 is a flowchart illustrating a processing procedure of trace forward executed by the information processing device according to the present embodiment;
FIG. 34 is a flowchart illustrating a processing procedure of traceback executed by the information processing device according to the present embodiment;
FIG. 35 is a diagram illustrating an example of a hardware configuration of a computer that implements functions similar to those of a detection device according to the present embodiment;
FIG. 36 is a diagram (1) for describing known registration processing;
FIG. 37 is a diagram (2) for describing known registration processing; and
FIG. 38 is a diagram (3) for describing known registration processing.

### [Description of Embodiments]

Embodiments of an information processing program, an information processing method, and an information processing device disclosed in the present application are hereinafter described in detail with reference to the drawings. Note that the present embodiment is not limited to the embodiments.

### [Embodiments]

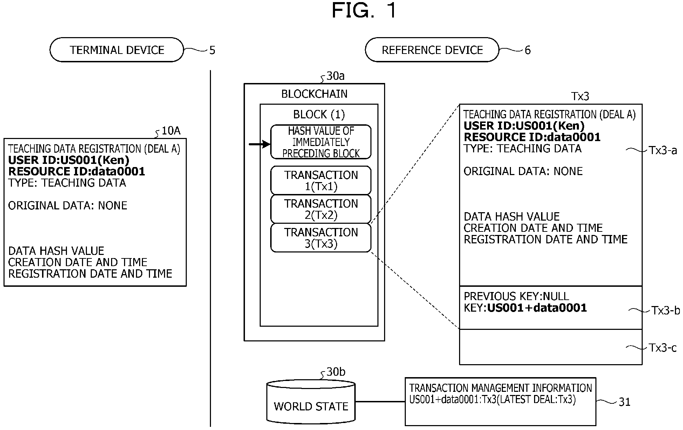

Before describing an information processing device according to the present embodiment, an example of registration processing of a related technology that can ensure reliability of a world state when registering deal information as a transaction in a blockchain will be described. FIGs. 1 to 4 are diagrams for describing registration processing of a reference technology. A device that executes the reference technology will be referred to as a "reference device". Here, it is assumed that each user operates a terminal device 5 to access a reference device 6 and performs a deal A, a deal B, a deal C, and a deal D in order. A deal is an example of an "event".

FIG. 1 will be described. In the case where the user (Ken) performs the "deal A", a screen 10A is displayed on the terminal device 5. For example, the deal A is a deal for registering teaching data to be used in deep learning. The user (Ken) refers to the screen 10A, operates the terminal device 5, and inputs a user ID "US001" and a resource ID "data0001". The user ID represents information that uniquely identifies the user (Ken).

The resource ID is information that uniquely identifies the teaching data. Information that is a combination of the user ID and the resource ID corresponds to "key information".

Information that uniquely identifies a transaction to be registered in a blockchain is referred to as a transaction ID and is represented by "Txn (n is a natural number)". As appropriate, a transaction with the transaction ID "Txn" is referred to as "transaction Txn".

The reference device 6 includes a blockchain 30a, and the blockchain 30a is separated from a world state 30b. The blockchain 30a includes a block (1). It is assumed that a hash value of an immediately preceding block (not illustrated) and transactions Tx1 and Tx2 are already registered in the block (1). When receiving input of information regarding the deal A from the terminal device 5, the reference device 6 generates a transaction Tx3. In a case where the transactions to be registered in the block (1) are accumulated, the reference device 6 registers each of the transactions in the block (1).

The transaction Tx3 includes a region Tx3-a, a region Tx3-b, and a region Tx3-c that are separated from each other. The reference device 6 registers the user ID "US001" and the resource ID "data0001" input on the screen 10A in the region Tx3-a. The reference device 6 registers a previous key "NULL" in the region Tx3-b because the "deal A" is the first deal. The reference device 6 registers a key "US001 + data0001", which is a combination of the user ID "US001" and the resource ID "data0001" input on the screen 10A, in the region Tx3-b. In the case of the first deal, the reference device 6 registers nothing in the region Tx3-c.

The reference device 6 has the world state 30b, and the world state 30b has transaction management information 31. The transaction management information 31 is information that associates deal information, a transaction in which the deal information is recorded, and information of the latest deal with one another. For example, the information of the deal A is information "US001 + data0001" that is a combination of the user ID "US001" and the resource ID "data0001" input on the screen 10A. The information of the deal A is registered in the blockchain 30a as the transaction Tx3, and the transaction Tx3 becomes the information of the latest deal. Therefore, the reference device 6 registers a record {"US001 + data0001": "Tx3" (the latest deal: Tx3)} in the transaction management information 31.

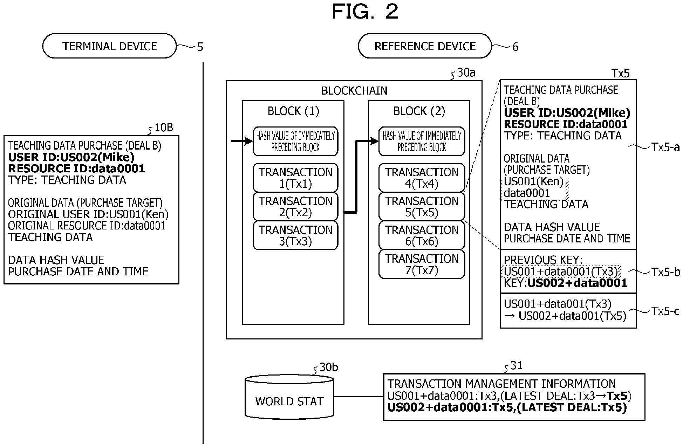

Description of FIG. 2 will be made. For example, in the blockchain 30a, the reference device 6 connects a block (2) to the block (1) and registers the hash value of the block (1) in the block (2). Furthermore, it is assumed that a transaction Tx4 is registered in the block (2). By registering the hash value of block (1) in the block (2), tampering with the transactions Tx1 to Tx3 in the block (1) is suppressed.

In the case where the user (Mike) performs the "deal B", a screen 10B is displayed on the terminal device 5. For example, the deal B is assumed to be a deal for purchasing the teaching data registered in the deal A. The user (Mike) refers to the screen 10B, operates the terminal device 5, and inputs a user ID "US002" and the resource ID "data0001".

Furthermore, the user (Mike) inputs information of original data to be purchased on the screen 10B. The information of original data includes an original user ID that uniquely identifies the user corresponding to the original data and an original resource ID that uniquely identifies the original data. In the case where the user (Mike) purchases the teaching data registered in the deal A, the user (Mike) inputs the original user ID "US001" and the original resource ID "data0001" on the screen 10B.

When receiving input of information regarding the deal B from the terminal device 5, the reference device 6 generates a transaction Tx5 and registers the transaction Tx5 in the block (2). The transaction Tx5 includes a region Tx5-a, a region Tx5-b, and a region Tx5-c. The reference device 6 registers the user ID "US002" and the resource ID "data0001" input on the screen 10B in the region Tx5-a. Furthermore, the reference device 6 registers the original user ID "US001" and the original resource ID "data0001" input on the screen 10B in the region Tx5-a.

The reference device 6 generates a key "US001 + data0001" that is a combination of the original user ID "US001" and the original resource ID "data0001" of the screen 10B, searches the transaction management information 31 using the generated key, and detects a transaction ID "Tx3". The reference device 6 registers a record "US001 + data0001 (Tx3)" in which the detected transaction ID "Tx3" and the generated key "US001 + data000" are associated to the previous key of the region Tx5-b. Furthermore, the reference device 6 registers a key "US002 + data0001" that is a combination of the user ID "US002" and the resource ID "data0001" of the screen 10B in the region Tx5-b. The reference device 6 determines that tampering has not been made when the previous key "US001 + data0001" stored in the region Tx5-b matches the record key "US001 + data0001". By such processing, the reliability of the transaction management information 31 of the world state 30b can be ensured.

The reference device 6 registers the information of the deal B "US002 + data0001", the transaction ID "Tx5" in which the information of the deal B is recorded, and the information of the latest deal "Tx5" in association with one another in the transaction management information 31. For example, the reference device 6 registers a record {"US002 + data0001": "Tx5" (the latest deal: Tx5)} in the transaction management information 31.

The reference device 6 refers to the transaction management information 31 and acquires the previous record {"US001 + data0001": "Tx3" (the latest deal: Tx3)}. The reference device 6 acquires the previous key "US001 + data0001" stored in the region Tx5-b.

The reference device 6 identifies the first parent-child relationship because the previous key stored in the region Tx3-b of the previous deal Tx3 is NULL and the latest deal is the transaction Tx3. The reference device 6 registers trace forward information "US001 + data0001 (Tx3) → US002 + data0001 (Tx5)" in the region Tx5-c. The trace forward information "US001 + data0001 (Tx3) → US002 + data0001 (Tx5)" indicates that the child transaction of the transaction Tx3 (key: US001 + data0001) is the transaction Tx5 (key: US002 + data0001).

Since the latest deal is the transaction Tx5, the reference device 6 updates the record {"US001 + data0001": "Tx3" (the latest deal: Tx3)} of the transaction management information 31 to {"US001 + data0001": "Tx3" (the latest deal: Tx5)}.

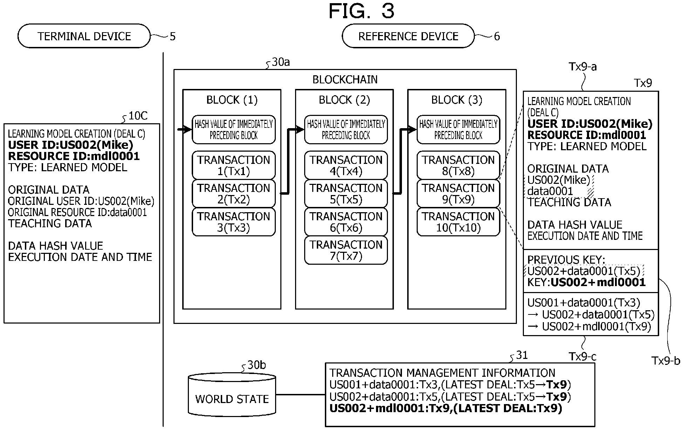

Description of FIG. 3 will be made. For example, in the blockchain 30a, the reference device 6 connects a block (3) to the block (2) and registers the hash value of the block (2) in the block (3). By registering the hash value of block (2) in the block (3), tampering with transactions Tx4 to Tx7 in the block (2) is suppressed.

In the case where the user (Mike) performs the "deal C", a screen 10C is displayed on the terminal device 5. For example, the deal C is a deal for generating a learning model using the teaching data purchased in the deal B. The user (Mike) refers to the screen 10C, operates the terminal device 5, and inputs the user ID "US002" and a resource ID "mdl0001". The resource ID "mdl0001" is information that uniquely identifies the learning model.

Furthermore, the user (Mike) inputs the information of the original data used in the learning of the learning model to the screen 10C. In the case of using the teaching data purchased in the deal B, the user (Mike) operates the terminal device 5 and inputs the original user ID "US002" and the original resource ID "data0001" to the screen 10C.

When receiving input of information regarding the deal C from the terminal device 5, the reference device 6 generates a transaction Tx9 and registers the transaction Tx5 in the block (3). The transaction Tx9 includes a region Tx9-a, a region Tx9-b, and a region Tx9-c. The reference device 6 registers the user ID "US002" and the resource ID "mdl0001" input on the screen 10C in the region Tx9-a. The reference device 6 registers the original user ID "US002" and the original resource ID "data0001" input on the screen 10C in the region Tx9-a.

The reference device 6 generates a key "US002 + data0001" that is a combination of the original user ID "US002" and the original resource ID "data0001" of the screen 10C, searches the transaction management information 31 using the generated key, and detects a transaction ID "Tx5". The reference device 6 registers a record "US002 + data0001 (Tx5)" in which the detected transaction ID "Tx5" and the generated key "US002 + data0001" are associated to the previous key of the region Tx9-b. Furthermore, the reference device 6 registers a key "US002 + mdl0001" that is a combination of the user ID "US002" and the resource ID "mdl0001" of the screen 10C in the region Tx9-b. The reference device 6 determines that tampering has not been made when the previous key "US002 + data0001" stored in the region Tx9-b matches the record key "US002 + data0001". By such processing, the reliability of the transaction management information 31 of the world state 30b can be ensured.

The reference device 6 registers the information of the deal C "US002 + mdl0001", the transaction ID "Tx9" in which the information of the deal C is recorded, and the information of the latest deal "Tx9" in association with one another in the transaction management information 31. For example, the reference device 6 registers a record {"US002 + mdl0001": "Tx9" (the latest deal: Tx9)} in the transaction management information 31.

The reference device 6 refers to the transaction management information 31 and acquires the previous record {"US002 + data0001": "Tx5" (the latest deal: Tx5)}. The reference device 6 acquires the previous key "US002 + data0001" stored in the region Tx9-b.

Since the latest deal is the transaction Tx5, the reference device 6 acquires trace forward information "US001 + data0001 (Tx3) → US002 + data0001 (Tx5)" from the region Tx5-c. In the acquired trace forward information, the oldest transaction ID is "Tx3" and the latest transaction ID is "Tx5", so it can be seen that the trace forward information "US001 + data0001 (Tx3) → US002 + data0001 (Tx5)" has not been tampered with.

The reference device 6 generates the latest trace forward information "US001 + data0001 (Tx3) → US002 + data0001 (Tx5) → US002 + mdl0001 (Tx9)" and registers the generated trace forward information in the region Tx9-c.

Since the latest deal is the transaction Tx9, the reference device 6 updates the record {"US001 + data0001": "Tx3" (the latest deal: Tx5)} of the transaction management information 31 to {"US001 + data0001": "Tx3" (the latest deal: Tx9)}. The reference device 6 updates the record {"US002 + data0001": "Tx5" (the latest deal: Tx5)} of the transaction management information 31 to {"US002 + data0001": "Tx5" (the latest deal: Tx9)}.

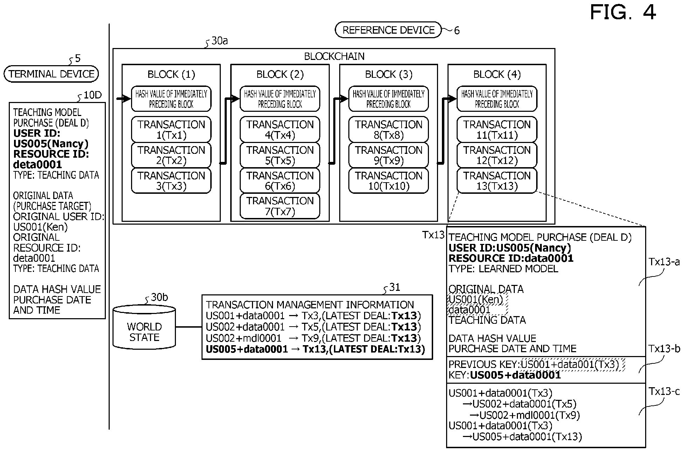

Description of FIG. 4 will be made. For example, in the blockchain 30a, the reference device 6 connects a block (4) to the block (3) and registers the hash value of the block (3) in the block 4). Furthermore, it is assumed that transactions Tx11 and Tx12 are registered in the block (4). By registering the hash value of block (3) in the block (4), tampering with transactions Tx8 to Tx10 in the block (3) is suppressed.

When the user (Nancy) performs the "deal D", a screen 10D is displayed on the terminal device 5. For example, the deal D is assumed to be a deal for purchasing the teaching data registered in the deal A. The user (Nancy) refers to the screen 10D, operates the terminal device 5, and inputs a user ID "US005" and the resource ID "data0001".

Furthermore, the user (Nancy) inputs the information of the original data to be purchased on the screen 10D. The information of original data includes an original user ID that uniquely identifies the user corresponding to the original data and an original resource ID that uniquely identifies the original data. In the case where the user (Nancy) purchases the teaching data registered in the deal A, the user (Nancy) inputs the original user ID "US001" and the original resource ID "data0001" on the screen 10D.

When receiving input of information regarding the deal D from the terminal device 5, the reference device 6 generates a transaction Tx13 and registers the transaction Tx13 in the block (4). The transaction Tx13 includes a region Tx13-a, a region Tx13-b, and a region Tx13-c. The reference device 6 registers the user ID "US005" and the resource ID "data0001" input on the screen 10D in the region Tx13-a. Furthermore, the reference device 6 registers the original user ID "US001" and the original resource ID "data0001" input on the screen 10D in the region Tx13-a.

The reference device 6 generates a key "US001 + data0001" that is a combination of the original user ID "US001" and the original resource ID "data0001" of the screen 10D, searches the transaction management information 31 using the generated key, and detects the transaction ID "Tx3". The reference device 6 registers a record "US001 + data0001 (Tx3)" in which the detected transaction ID "Tx3" and the generated key "US001 + data0001" are associated to the previous key of the region Tx13-b. Furthermore, the reference device 6 registers a key "US005 + data0001" that is a combination of the user ID "US005" and the resource ID "data0001" of the screen 10D in the region Tx13-b. The reference device 6 determines that tampering has not been made when the previous key "US001 + data0001" stored in the region Tx13-b matches the record key "US001 + data0001". By such processing, the reliability of the transaction management information 31 of the world state 30b can be ensured.

The reference device 6 registers the information of the deal D "US005 + data0001", the transaction ID "Tx13" in which the information of the deal D is recorded, and the information of the latest deal "Tx13" in association with one another in the transaction management information 31. For example, the reference device 6 registers a record {"US005 + data0001": "Tx13" (the latest deal: Tx13)} in the transaction management information 31.

The reference device 6 refers to the transaction management information 31 and acquires the previous record {"US001 + data0001": "Tx3" (the latest deal: Tx9)}. The reference device 6 acquires the previous key "US001 + data0001" stored in the region Tx13-b.

Since the latest deal is the transaction Tx9, the reference device 6 acquires the trace forward information "US001 + data0001 (Tx3) → US002 + data0001 (Tx5) → US002 + mdl0001 (Tx9)" from the region Tx9-c. In the acquired trace forward information, the oldest transaction ID is "Tx3" and the latest transaction ID is "Tx9", so it can be seen that the trace forward information "US001 + data0001 (Tx3) → US002 + data0001 (Tx5) → US002 + mdl0001 (Tx9)" has not been tampered with.

The reference device 6 registers the trace forward information "US001 + data0001 (Tx3) → US002 + data0001 (Tx5) → US002 + mdl0001 (Tx9)" in the region Tx13-c. Furthermore, since the transaction Tx3 is branched, the reference device 6 generates and registers the trace forward information "US001 + data0001 (Tx3) → US005 + data0001 (Tx13)" in the region Tx13-c.

Since the latest deal is the transaction Tx13, the reference device 6 updates the record {"US001 + data0001": "Tx3" (the latest deal: Tx9)} of the transaction management information 31 to {"US001 + data0001": "Tx3" (the latest deal: Tx13)}. The reference device 6 updates the record {"US002 + data0001": "Tx5" (the latest deal: Tx9)} of the transaction management information 31 to {"US002 + data0001": "Tx5" (the latest deal: Tx13)}. The reference device 6 updates the record {"US002 + mdl0001": "Tx9" (the latest deal: Tx9)} of the transaction management information 31 to {"US002 + mdl0001": "Tx9" (the latest deal: Tx13)}.

According to the reference technology described with reference to FIGs. 1 to 4, whether or not the transaction management information 31 registered in the world state 30b is tampered with is determined each time a new transaction is registered. Furthermore, according to the reference technology, whether or not the trace forward information is tampered with is determined each time a new transaction is registered. Therefore, according to the reference technology, the reliability of the world state 30b can be ensured, and tampering of content and flows of deals can be suppressed.

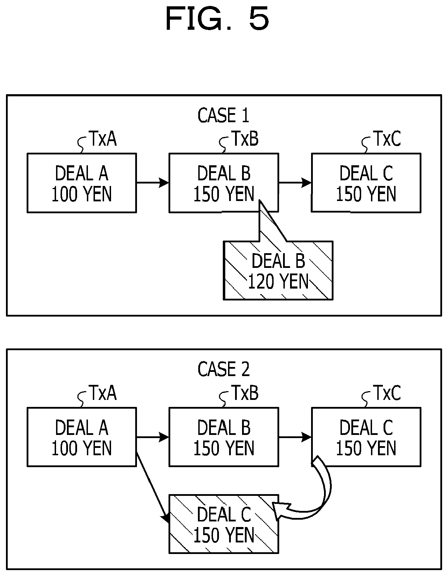

However, the above-described reference technology has a problem of not being capable of modifying an error of the content or flow registered in the blockchain. FIG. 5 is a diagram for describing a problem in the reference technology. In the example illustrated in Case 1 of FIG. 5, a transaction TxA of the deal A, a transaction TxB of the deal B, and a transaction TxC of the deal C are associated in order in the blockchain. Here, even in a case of modifying the transaction TxB of the deal B from "150 yen" to "120 yen", there is no way to modify in the reference technology.

In the example illustrated in Case 2 of FIG. 5, the transaction TxA of the deal A, the transaction TxB of the deal B, and the transaction TxC of the deal C are associated in order in the blockchain. Here, even in a case of moving the transaction TxC of the deal C from after the transaction TxB of the deal B to after of the transaction TxA of the deal A, there is no way to modify in the reference technique.

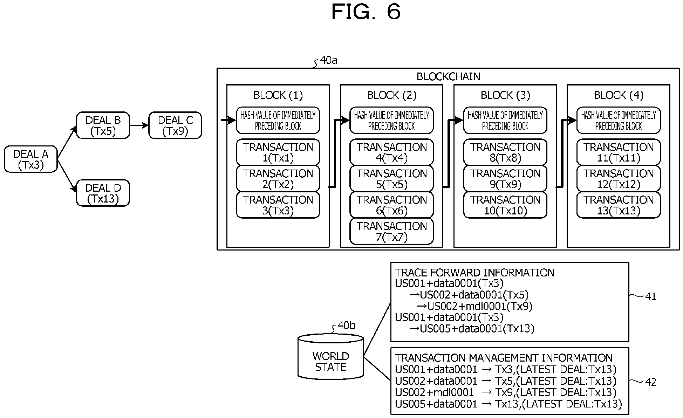

Next, processing of an information processing device according to the present embodiment will be described. FIGs. 6 to 9 are diagrams for describing processing of modifying content of a deal by the information processing device according to the present embodiment. FIG. 6 will be described. When receiving the information of a deal A, a deal B, a deal C, and a deal D, the information processing device executes processing similar to the reference device 6 (the processing described in FIGs. 1 to 4) to generate a blockchain 40a and a world state 40b. It is assumed that information of the deals A to D corresponds to the information of the deals A to D described in FIGs. 1 to 4.

Blocks (1), (2), (3), and (4) are connected to the blockchain 40a. A hash value of an immediately preceding block (not illustrated) is registered in the block (1). Furthermore, the block (1) includes a transaction Tx1, a transaction Tx2, and a transaction Tx3. The transaction corresponding to the deal A is the transaction Tx3.

The hash value of the immediately preceding block (1) is registered in the block (2). Furthermore, the block (2) includes a transaction Tx4, a transaction Tx5, a transaction Tx6, and a transaction Tx7. The transaction corresponding to the deal B is the transaction Tx5.

The hash value of the immediately preceding block (2) is registered in the block (3). Furthermore, the block (3) includes a transaction Tx8, a transaction Tx9, and a transaction Tx10. The transaction corresponding to the deal C is the transaction Tx9.

The hash value of the immediately preceding block (3) is registered in the block (4). Furthermore, the block (4) includes a transaction Tx11, a transaction Tx12, and a transaction Tx13. The transaction corresponding to the deal D is the transaction Tx13.

Trace forward information 41 and transaction management information 42 are registered in the world state 40b. The trace forward information 41 is obtained by the reference device 6 registering trace forward information registered in the latest transaction in the world state 40b instead. For the information processing device according to the present embodiment, the case of registering the trace forward information 41 in the world state 40b will be described. However, the trace forward information 41 may be registered in the transaction similarly to the reference device 6.

The transaction management information 42 is information that associates deal information, a transaction in which the deal information is recorded, and information of the latest deal with one another.

At the time when the information processing device registers the transaction Tx13 in the block (4), the trace forward information in FIG. 6 is information similar to the trace forward information registered in the region Tx13-c of the transaction Tx13 in FIG. 4. Furthermore, the transaction management information 42 is information similar to the transaction management information 31 in FIG. 4. The trace forward information becomes the latest trace forward information, and the old trace forward information is updated with the new trace forward information.

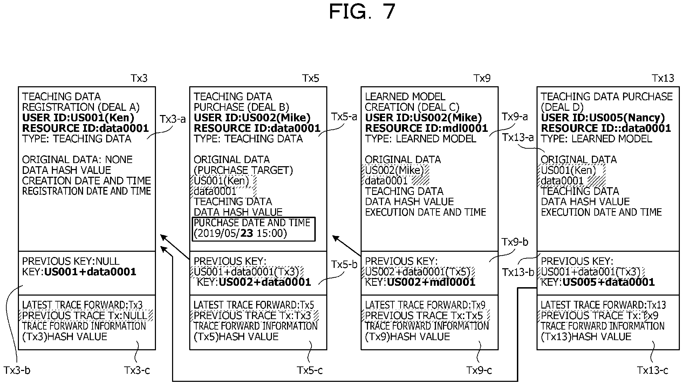

Description of FIG. 7 will be made. FIG. 7 illustrates data structures of the transactions Tx3, Tx5, Tx9, and Tx13.

The transaction Tx3 will be described. The transaction Tx3 includes a region Tx3-a, a region Tx3-b, and a region Tx3-c. Information of a corresponding deal is set in the region Tx3-a. Information regarding connection with a previous deal is set in the region Tx3-b. The trace forward information is set in the region Tx3-c.

The information registered in the region Tx3-a and the region Tx3-b is similar to the information registered in the region Tx3-a and the region Tx3-b described in FIG. 1. The latest trace forward, the previous trace, and the hash value of the trace forward information (Tx3) are stored in the region Tx3-c. The latest trace forward is set with its own transaction ID "Tx3". In the previous trace Tx, the transaction ID when the trace forward information was previously registered in the world state 40b is set. In a case where the trace forward information previously registered in the world state 40b is not present, "NULL" is set to the previous trace Tx.

The hash value of the trace forward information (Tx3) will be described. The trace forward information at the time when the transaction Tx3 has been registered is registered in the world state 40b as the trace forward information 41, and the hash value of the trace forward information 41 becomes the hash value of the trace forward information (Tx3).

The transaction Tx5 will be described. The transaction Tx5 includes a region Tx5-a, a region Tx5-b, and a region Tx5-c. Information of a corresponding deal is set in the region Tx5-a. Information regarding connection with a previous deal is set in the region Tx5-b. The trace forward information is set in the region Tx5-c.

The information registered in the region Tx5-a and the region Tx5-b is similar to the information registered in the region Tx5-a and the region Tx5-b described in FIG. 2. Note that it is assumed that the information of the deal B includes information of purchase date and time, and the information processing device registers the purchase date and time "2019/05/23 15:00" in the region Tx5-a.

The latest trace forward, the previous trace, and the hash value of the trace forward information (Tx5) are stored in the region Tx5-c. The latest trace forward is set with its own transaction ID "Tx5". In the previous trace Tx, the transaction ID when the trace forward information was previously registered in the world state 40b is set. In a case where the trace forward information previously registered in the world state 40b is information registered at the time when the transaction Tx3 was created, "Tx3" is set in the previous trace Tx.

The hash value of the trace forward information (Tx5) will be described. The information processing device registers the trace forward information "US001 + data0001 (Tx3) → US002 + data0001 (Tx5)" at the time when the transaction Tx5 is registered to the world state 40b as the trace forward information 41. The information processing device uses the hash value of the trace forward information "US001 + data0001 (Tx3) → US002 + data0001 (Tx5)" as the hash value of the trace forward information (Tx5).

The transaction Tx9 will be described. The transaction Tx9 includes a region Tx9-a, a region Tx9-b, and a region Tx9-c. Information of a corresponding deal is set in the region Tx9-a. Information regarding connection with a previous deal is set in the region Tx9-b. The trace forward information is set in the region Tx9-c.

The information registered in the region Tx9-a and the region Tx9-b is similar to the information registered in the region Tx9-a and the region Tx9-b described in FIG. 3. The latest trace forward, the previous trace, and the hash value of the trace forward information (Tx9) are stored in the region Tx9-c. The latest trace forward is set with its own transaction ID "Tx9". In the previous trace Tx, the transaction ID when the trace forward information was previously registered in the world state 40b is set. In a case where the trace forward information previously registered in the world state 40b is information registered at the time when the transaction Tx5 was created, "Tx5" is set in the previous trace Tx.

The hash value of the trace forward information (Tx9) will be described. The information processing device registers the trace forward information "US001 + data0001 (Tx3) → US002 + data0001 (Tx5) → US002 + mdl0001 (Tx9)" at the time when the transaction Tx9 is registered to the world state 40b as the trace forward information 41. The information processing device uses the hash value of the trace forward information "US001 + data0001 (Tx3) → US002 + data0001 (Tx5) → US002 + mdl0001 (Tx9)" as the hash value of the trace forward information (Tx9).

The transaction Tx13 will be described. The transaction Tx13 includes a region Tx13-a, a region Tx13-b, and a region Tx13-c. Information of a corresponding deal is set in the region Tx13-a. Information regarding connection with a previous deal is set in the region Tx13-b. The trace forward information is set in the region Tx13-c.

The information registered in the region Tx13-a and the region Tx13-b is similar to the information registered in the region Tx13-a and the region Tx13-b described in FIG. 4. The latest trace forward, the previous trace, and the hash value of the trace forward information (Tx13) are stored in the region Tx13-c. The latest trace forward is set with its own transaction ID "Tx13". In the previous trace Tx, the transaction ID when the trace forward information was previously registered in the world state 40b is set. In a case where the trace forward information registered in the world state 40b is information registered at the time when the transaction Tx9 was created, "Tx9" is set in the previous trace Tx.

The hash value of the trace forward information (Tx13) will be described. The information processing device registers the trace forward information "US001 + data0001 (Tx3) → US002 + data0001 (Tx5) → US002 + mdl0001 (Tx9)" and "US001 + data0001 (Tx3) → US005 + data0001 (Tx13)" at the time when the transaction Tx13 is registered in the world state 40b as the trace forward information 41. The information processing device uses the hash value of trace forward information "US001 + data0001 (Tx3) → US002 + data0001 (Tx5) → US002 + mdl0001 (Tx9)" and "US001 + data0001 (Tx3) → US005 + data0001 (Tx13)" as the hash value of the trace forward information (Tx13).

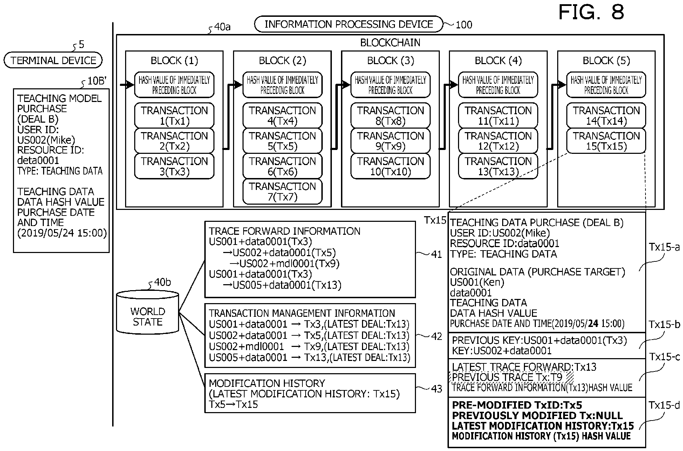

Description of FIG. 8 will be made. Here, processing of an information processing device 100 when modifying deal content of the deal B will be described. As an example, a case where the purchase date and time is modified from "2019/05/23 15:00" to "2019/05/24 15:00" will be described.

In the case where the user (Mike) modifies the "deal B", a screen 10B' is displayed on the terminal device 5. For example, the deal B is assumed to be a deal for purchasing the teaching data registered in the deal A. The user (Mike) refers to a screen 10B', operates the terminal device 5, and reinputs a user ID "US002" and the resource ID "data0001". Furthermore, the user operates the terminal device 5 to reinput the correct purchase date and time "2019/05/24 15:00".

When receiving input of information regarding the deal B to be modified from the terminal device 5, the information processing device 100 generates a transaction Tx15 corresponding to the deal B to be modified and registers the transaction Tx15 in a block (5) while executing a series of processing for ensuring reliability to be described below. Furthermore, the information processing device 100 generates a modification history 43 indicating that the transaction Tx5 corresponding to the deal B has been modified to the transaction Tx15 of the deal B to be modified, and registers the modification history 43 in the world state 40b.

A series of processing (processing 1a) to (processing 9a) for modifying the deal B by the information processing device 100 will be described in order. (Processing 1a) The information processing device 100 compares the key "US002 + data001" included in the information regarding the deal B to be modified with the transaction management information 42, and specifies the transaction ID "Tx5" to be modified and the latest deal information "Tx13".

(Processing 2a) The information processing device 100 generates the transaction Tx15 on the basis of the information regarding the deal B to be modified received from the terminal device 5, and registers the transaction Tx15 in the block (5). Note that it is assumed that a transaction Tx14 is registered in the block (5).

The transaction Tx15 includes a region Tx15-a, a region Tx15-b, a region Tx15-c, and a region 15-d. The information processing device 100 registers the user ID "US002" and the resource ID "data0001" input on the screen 10B' in the region Tx15-a. Furthermore, the information processing device 100 registers the original user ID "US001" and the original resource ID "data0001" input on the screen 10B' in the region Tx15-a. The information processing device 100 registers the purchase date and time "2019/05/24 15:00" input on the screen 10B' in the region Tx15-a.

(Processing 3a) The information processing device 100 registers and inherits the information registered in the region Tx5-b of the transaction Tx5 to be modified in the region Tx15-b of the transaction Tx15. The transaction ID to be modified is specified in (processing 1a).

(Processing 4a) Since the trace forward information has not been updated, the information processing device 100 skips the processing regarding the trace forward information.

(Processing 5a) The information processing device 100 registers the information registered in the region Tx13-c of the transaction Tx13 corresponding to the latest deal in the region Tx15-c of the transaction Tx15. The transaction Tx13 corresponding to the latest deal is specified in (processing 1a).

(Processing 6a) The information processing device 100 registers information regarding a modification history in the region Tx15-d of the transaction Tx15. For example, the region Tx15-d includes a pre-modified TxID, a previously modified Tx, a latest modification history, and a modification history hash value.

Since the transaction before modification of the transaction Tx15 is the transaction Tx5, the information processing device 100 registers "pre-modified TxID: Tx5". Since there is no previous modification history, the information processing device 100 registers "previously modified Tx: NULL". Since the latest modification is the transaction Tx15, the information processing device 100 registers "latest modification history: Tx15".

(Processing 7a) The information processing device 100 registers the modification history 43 in the world state 40b. The modification history 43 includes "Tx5 → Tx15". "Tx5 → Tx15" indicates that the transaction Tx5 has been modified by the transaction Tx15.

(Processing 8a) The information processing device 100 calculates the hash value of the modification history 43 and registers the hash value in the region Tx15-d of the transaction Tx15.

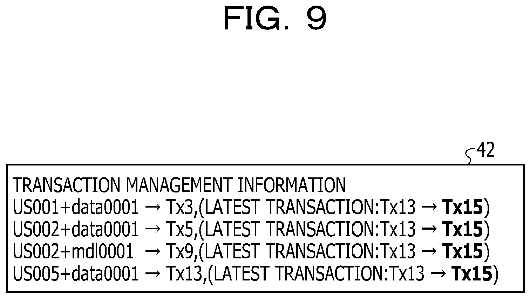

(Processing 9a) As illustrated in FIG. 9, the information processing device 100 changes the latest deal of the transaction management information 42 from Tx13 to Tx15 to update the transaction management information 42.

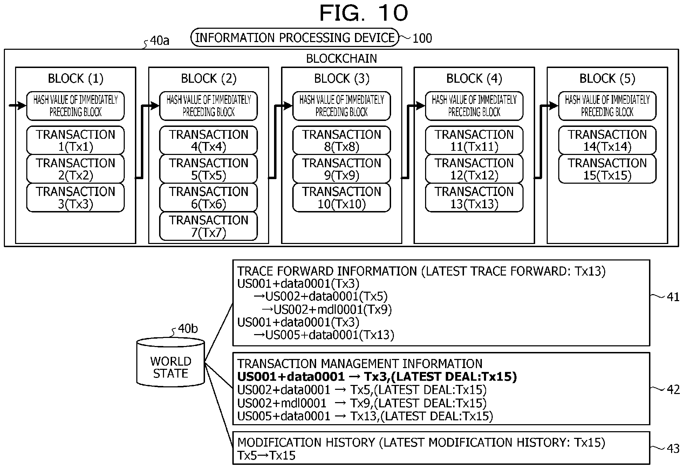

Next, trace forward executed by the information processing device according to the present embodiment will be described. FIGs. 10 to 12 are diagrams for describing trace forward executed by the information processing device according to the present embodiment. Although not illustrated in FIG. 10, the data structures of the transactions Tx3, Tx5, Tx9, and Tx13 correspond to the data structures described in FIG. 7. The data structure of the transaction Tx15 corresponds to the data structure described in FIG. 8.

A series of processing (processing 1b) to (processing 8b) of trace forward executed by the information processing device 100 will be described in order. (Processing 1b) The information processing device 100 receives a key of a base point of the trace forward from the terminal device 5. As an example, a case of receiving "US001 + data0001" as the key of the base point will be described. The information processing device 100 compares the key of the base point "US001 + data0001" with the transaction management information 42, and acquires the transaction ID "Tx3" serving as the base point and the latest transaction ID "Tx15".

(Processing 2b) The information processing device 100 determines that the deal content of the transaction Tx3 is valid content because the key "US001 + data0001" that is a combination of the user ID and the resource ID of the transaction Tx3 matches the key of the base point. When the respective keys do not match, the information processing device 100 interrupts the subsequent processing.

(Processing 3b) The information processing device 100 acquires the key "Tx13" of the latest trace forward and the hash value of the trace forward information from the region Tx15-c of the latest transaction Tx15 specified in (processing 1b).

(Processing 4b) When the hash value acquired in (processing 3b) matches the hash value of the trace forward information 41, the information processing device 100 determines that the trace forward information 41 is valid content. The information processing device 100 acquires the trace forward information 41 when the respective hash values match. When the respective hash values do not match, the information processing device 100 traces the previous trace of the transaction Tx15 to restore the trace forward information 41.

(Processing 5b) The information processing device 100 acquires the key "Tx15" of the latest modification history and the hash value of the modification history from Tx15-d of the latest transaction Tx15 specified in (processing 1b).

(Processing 6b) In the case where the hash value acquired in (processing 3b) matches the hash value of the modification history 43, the information processing device 100 determines that the modification history 43 is valid content. The information processing device 100 acquires the modification history 43 in the case where the respective hash values match. In the case where the respective hash values do not match, the information processing device 100 traces the previously modified Tx of the transaction Tx15 to restore the modification history 43.

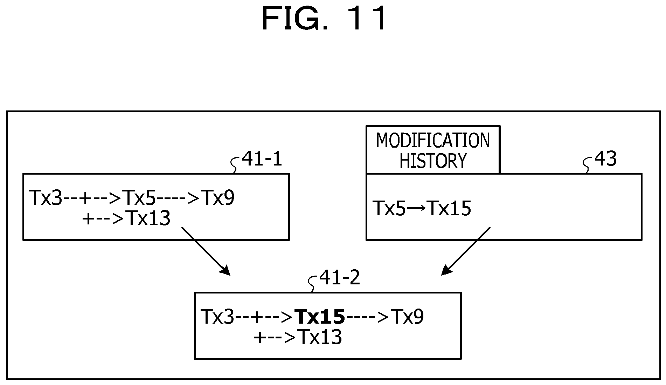

(Processing 7b) The information processing device generates the latest trace forward information on the basis of the trace forward information 41 acquired in (processing 4b) and the modification history 43 acquired in (processing 6b). (Processing 7b) will be described with reference to FIG. 11.

In FIG. 11, trace forward information 41-1 corresponds to the trace forward information 41 acquired in (processing 4b). The trace forward information 41-1 indicates that the order of the transactions Tx is the order of Tx3, Tx5, Tx9, and Tx13. The modification history 43 indicates that the transaction Tx5 has been modified to the transaction Tx15.

The information processing device 100 reflects the modification history 43 in the trace forward information 41-1 to generate latest trace forward information 41-2. The trace forward information 41-2 indicates that the order of the transactions Tx is the order of Tx3, Tx15, Tx9, and Tx13.

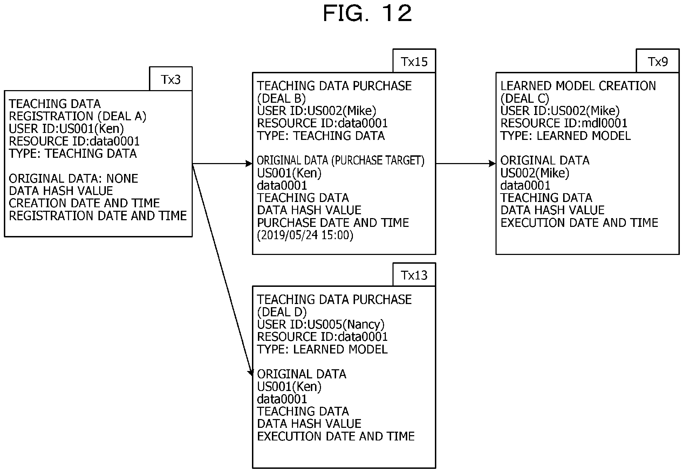

(Processing 8b) The information processing device 100 outputs information of connecting each of the transactions Tx as a trace forward processing result based on the trace forward information 41-2 generated in (processing 7b). FIG. 12 illustrates an example of the trace forward processing result. As illustrated in FIG. 12, the transaction Tx15 and the transaction Tx13 are connected as children of the transaction Tx3. The transaction Tx9 is connected as a child of the transaction Tx15. The transaction Tx15 has been replaced with the transaction Tx5, reflecting modification of the deal B.

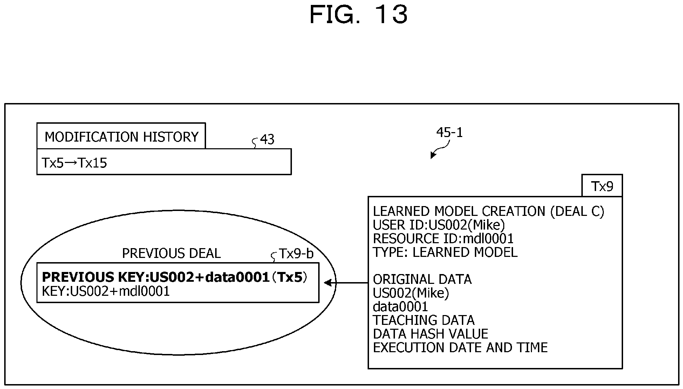

Next, traceback executed by the information processing device according to the present embodiment will be described. FIGs. 13 to 15 are diagrams for describing traceback executed by the information processing device according to the present embodiment. First, a series of processing (processing 1c) to (processing 7c) of the traceback executed by the information processing device 100 will be described in order with reference to FIG. 10.

(Processing 1c) The information processing device 100 receives a key of a base point of the traceback from the terminal device 5. As an example, a case of receiving a key of a base point "US002 + mdl0001" will be described. The information processing device 100 compares the key of the base point "US002 + mdl0001" with the transaction management information 42, and acquires the transaction ID "Tx9" serving as the base point and the latest transaction ID "Tx15".

(Processing 2c) The information processing device 100 determines that the deal content of the transaction Tx9 is valid content because the key "US002 + mdl0001" that is a combination of the user ID and the resource ID of the transaction Tx9 matches the key of the base point. When the respective keys do not match, the information processing device 100 interrupts the subsequent processing.

(Processing 3c) The information processing device 100 acquires the key "Tx15" of the last modification history and the hash value of the modification history from the region Tx15-d of the latest transaction Tx15 specified in (processing 1c).

(Processing 4c) When the hash value acquired in (processing 3c) matches the hash value of the modification history 43, the information processing device 100 determines that the modification history 43 is valid content. The information processing device 100 acquires the modification history 43 when the respective hash values match. In the case where the respective hash values do not match, the information processing device 100 traces the previously modified Tx of the transaction Tx15 to restore the modification history 43.

(Processing 5c) Description of FIG. 13 will be made. The information processing device 100 specifies that the transaction Tx9 serving as the base point has not been modified based on the modification history 43 acquired in (processing 4c). The information processing device 100 generates traceback information 45-1 having the transaction Tx9. The information processing device 100 refers to the region Tx9-b of the transaction Tx9 and identifies the transaction Tx5 of the previous key "US002 + data0001".

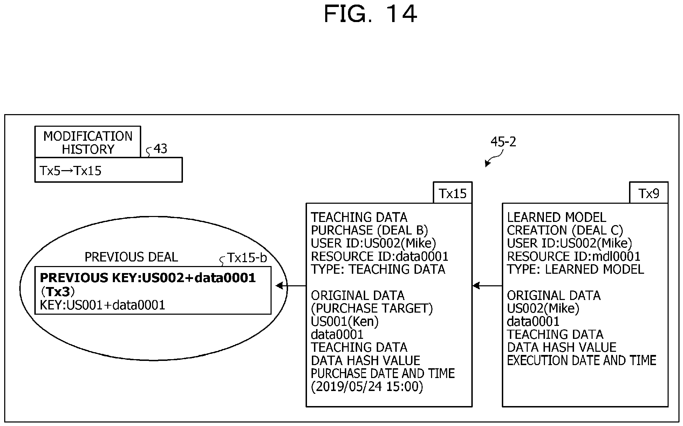

(Processing 6c) Description of FIG. 14 will be made. The information processing device 100 specifies that the transaction Tx5 has been modified to the transaction Tx15 based on the modification history 43 acquired in (processing 4c). The information processing device 100 generates traceback information 45-2 by adding the transaction Tx15 instead of the transaction Tx5 to the traceback information 45-1. The information processing device 100 refers to the region Tx15-b of the transaction Tx15 and specifies the transaction Tx3 of the previous key "US001 + data0001".

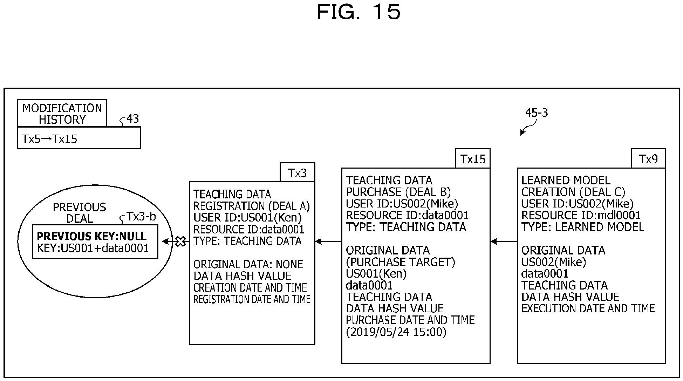

(Processing 7c) Description of FIG. 15 will be made. The information processing device 100 specifies that the transaction Tx3 has not been modified based on the modification history 43 acquired in (processing 4c). The information processing device 100 adds the transaction Tx3 to the traceback information 45-2 to generate traceback information 45-3. The information processing device 100 refers to the region Tx3-b of the transaction Tx3. Since the previous key is "NULL", the information processing device 100 terminates the traceback and outputs the traceback information 45-3.

As described with reference to FIGs. 6 to 9, when the information processing device 100 receives the input of the information regarding the deal B to be modified from the terminal device 5, the information processing device 100 executes the series of processing (processing 1a) to (processing 9a) for ensuring the reliability, which will be described below. Thereby, the transaction Tx15 corresponding to the deal B to be modified is generated and registered in the blockchain 40a, the modification history 43 is generated, and the transaction Tx5 can be replaced with the transaction Tx15 by the modification history 43. That is, the deal information of the blockchain 40a can be modified while ensuring the reliability.

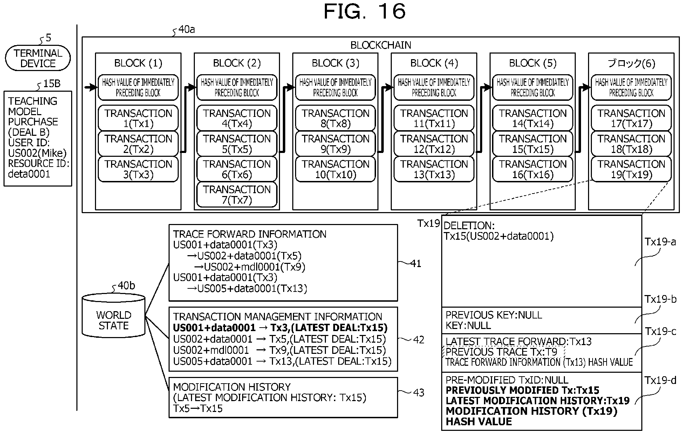

Next, processing of canceling (deleting) a deal by the information processing device according to the present embodiment will be described. FIGs. 16 to 18 are diagrams for describing processing of canceling a deal by the information processing device according to the present embodiment. Here, a case of canceling the deal B will be described.

As illustrated in FIG. 16, in the case where the user deletes the "deal B", a screen 15B is displayed on the terminal device 5. For example, the user refers to the screen 15B, operates the terminal device 5, and inputs the user ID "US002" and the resource ID "data0001" of the deal B to be deleted.

When receiving the input of the information regarding the deal B to be deleted from the terminal device 5, the information processing device 100 generates a transaction Tx19 corresponding to the information of the deal B to be deleted and registers a transaction Tx19 in a block (6) while executing the series of processing for ensuring reliability to be described below. Furthermore, the information processing device 100 registers information indicating that the transactions Tx5 and Tx15 corresponding to the deal B have been deleted, and information indicating that the transaction Tx9 serving as a child of the transaction Tx5 has been deleted in the modification history 43.

The series of processing (processing 1d) to (processing 8d) of canceling the deal B by the information processing device 100 will be described in order. (Processing 1d) The information processing device 100 compares the key "US002 + data0001" that is a combination of the user ID "US002" and the resource ID "data0001" input on the screen 15B with the transaction management information 42, and specifies the transaction ID "Tx5" to be deleted and information "Tx15" of the latest deal.

(Processing 2d) The information processing device 100 continues the canceling processing in a case where the key "US002 + data0001" that is a combination of the user ID "US002" and the resource ID "data0001" stored in the region Tx5-a of the transaction Tx5 to be deleted matches the key "US002 + data0001" acquired in (processing 1d).

(Processing 3d) The information processing device 100 acquires the latest trace forward "Tx13" registered in the region Tx15-c of the transaction Tx15 corresponding to the latest deal and the hash value of the trace forward information. Furthermore, the information processing device 100 acquires the latest modification history "Tx15" registered in the region Tx15-d and the hash value of the modification history.

(Processing 4d) The information processing device 100 acquires the modification history 43 corresponding to the latest modification history "Tx15" acquired in (processing 3d), and specifies that the transaction Tx5 has been modified to the transaction Tx15. The information processing device 100 verifies whether or not the modification history 43 has been tampered with based on the hash value of the modification history 43 and the hash value of the modification history acquired in (processing 3d).

(Processing 5d) The information processing device 100 acquires the trace forward information 41 and specifies that the child of the transaction Tx5 is the transaction Tx9. The information processing device 100 verifies whether or not the trace forward information has been tampered with based on the hash value of the trace forward information 41 and the hash value of the trace forward information acquired in (processing 3d).

(Processing 6d) The information processing device 100 refers to the region Tx9-b of the transaction Tx9 specified in (processing 5d) and specifies the key of the previous deal. In the case where the previous deal is only the transaction Tx5, the information processing device 100 specifies the transaction Tx9 as the transaction to be deleted. In a case where the previous deal includes a transaction other than the transaction Tx5, the information processing device 100 does not specify the transaction Tx9 as the transaction to be deleted. In the example illustrated in FIG. 7, since the previous key is only "US002 + data0001" and is the key of the transaction Tx5, the information processing device 100 specifies the transaction Tx9 as the transaction to be deleted.

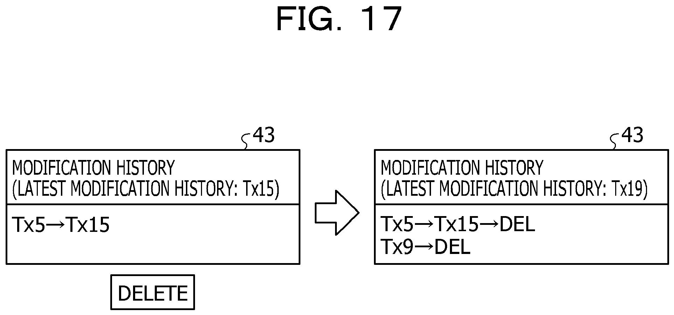

(Processing 7d) As illustrated in FIG. 17, the information processing device 100 deletes the modification history 43 acquired in (processing 4d) and adds a new modification history 43 to the world state 40b. The new modification history 43 includes the fact that the transactions Tx5 and Tx15 have been deleted. In addition, the modification history 43 includes the fact that the transaction Tx9 has been deleted.

(Processing 8d) The information processing device 100 generates the transaction Tx19 with respect to the information of the deletion processing received from the terminal device 5, and registers the transaction Tx19 in the block (6). Note that it is assumed that transactions Tx17 and Tx18 are registered in the block (6). The transaction Tx19 includes a region Tx19-a, a region Tx19-b, a region Tx19-c, and a region Tx19-d.

The information processing device 100 registers information regarding the modification history in the region Tx19-d. For example, the region Tx19-d includes a pre-modified TxID, a previously modified Tx, a latest modification history, and a modification history hash value.

Since a transaction before modification of the transaction Tx19 is not present, the information processing device 100 registers "pre-modified TxID: NULL". Since the transaction ID of the previous modification history is "Tx15", the information processing device 100 registers "previously modified Tx: Tx15". Since the latest modification is the transaction Tx19, the information processing device 100 registers "latest modification history: Tx19". The information processing device 100 calculates the hash value of the modification history 43 and registers the hash value in the region Tx19-d.

(Processing 9d) The information processing device 100 registers the key of the deleted transaction Tx15 "US0002 + data0001" in the region Tx19-a of the transaction Tx19. The information processing device 100 sets "NULL" in the previous key of the region Tx19-b. The information processing device 100 registers the information regarding the trace forward information acquired in (processing 3d) in the region Tx19-c (copies the information of the region Tx15-c to the region Tx19-c).

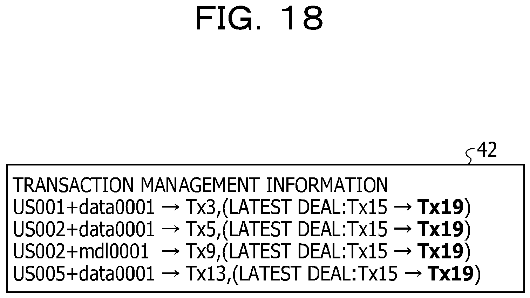

(Processing 10d) As illustrated in FIG. 18, the information processing device 100 changes the latest deal of the transaction management information 42 from Tx15 to Tx19 to update the transaction management information 42.

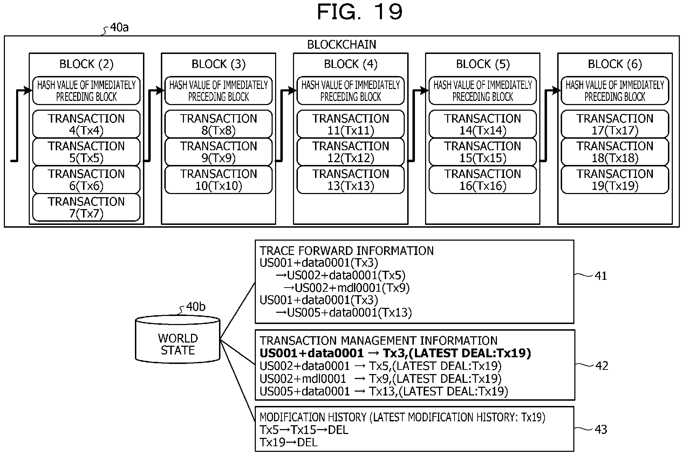

Next, trace forward executed by the information processing device according to the present embodiment will be described. FIGs. 19 to 21 are diagrams for describing trace forward executed by the information processing device according to the present embodiment. Although not illustrated in FIG. 19, the data structures of the transactions Tx3, Tx5, Tx9, and Tx13 correspond to the data structures described in FIG. 7. The data structure of the transaction Tx15 corresponds to the data structure described in FIG. 8. The data structure of the transaction Tx19 corresponds to the data structure described in FIG. 16.

A series of processing (processing 1e) to (processing 8e) of trace forward executed by the information processing device 100 will be described in order. (Processing 1e) The information processing device 100 receives a key of a base point of the trace forward from the terminal device 5. As an example, a case of receiving "US001 + data0001" as the key of the base point will be described. The information processing device 100 compares the key of the base point "US001 + data0001" with the transaction management information 42, and acquires the transaction ID "Tx3" serving as the base point and the latest transaction ID "Tx19".

(Processing 2e) The information processing device 100 determines that the deal content of the transaction Tx3 is valid content because the key "US001 + data0001" that is a combination of the user ID and the resource ID of the transaction Tx3 matches the key of the base point. when the respective keys do not match, the information processing device 100 interrupts the subsequent processing.

(Processing 3e) The information processing device 100 acquires the key "Tx13" of the latest trace forward and the hash value of the trace forward information from the region Tx19-c of the latest transaction Tx19 specified in (processing 1e).

(Processing 4e) when the hash value acquired in (processing 3e) matches the hash value of the trace forward information 41, the information processing device 100 determines that the trace forward information 41 is valid content. The information processing device 100 acquires the trace forward information 41 when the respective hash values match. When the respective hash values do not match, the information processing device 100 traces the previous trace of the transaction Tx19 to restore the trace forward information 41.

(Processing 5e) The information processing device 100 acquires the key "Tx19" of the latest modification history and the hash value of the modification history from Tx19-d of the latest transaction Tx19 specified in (processing 1e).

(Processing 6e) When the hash value acquired in (processing 3e) matches the hash value of the modification history 43, the information processing device 100 determines that the modification history 43 is valid content. The information processing device 100 acquires the modification history 43 when the respective hash values match. When the respective hash values do not match, the information processing device 100 traces the previously modified Tx of the transaction Tx19 to restore the modification history 43.

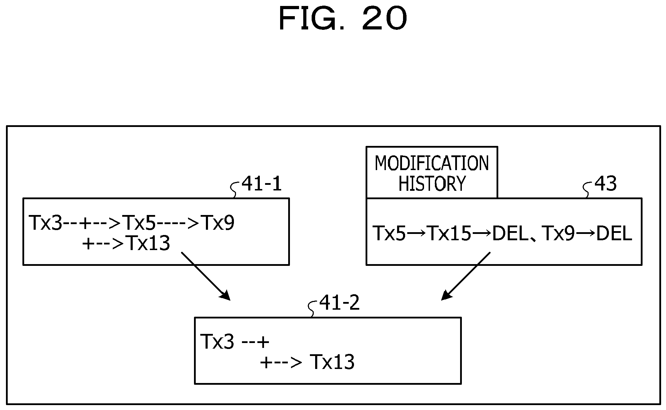

(Processing 7e) The information processing device generates the latest trace forward information on the basis of the trace forward information 41 acquired in (processing 4e) and the modification history 43 acquired in (processing 6e). (Processing 7e) will be described with reference to FIG. 20.

In FIG. 20, trace forward information 41-1 corresponds to the trace forward information 41 acquired in (processing 4e). The trace forward information 41-1 indicates that the order of the transactions Tx is the order of Tx3, Tx5, Tx9, and Tx13. The modification history 43 indicates that the transactions Tx5 and Tx15 have been deleted. In addition, the modification history 43 indicates that the transaction Tx9 has been deleted.

The information processing device 100 reflects the modification history 43 in the trace forward information 41-1 to generate latest trace forward information 41-2. The trace forward information 41-2 indicates that the order of the transactions Tx is the order of Tx3 and Tx13.

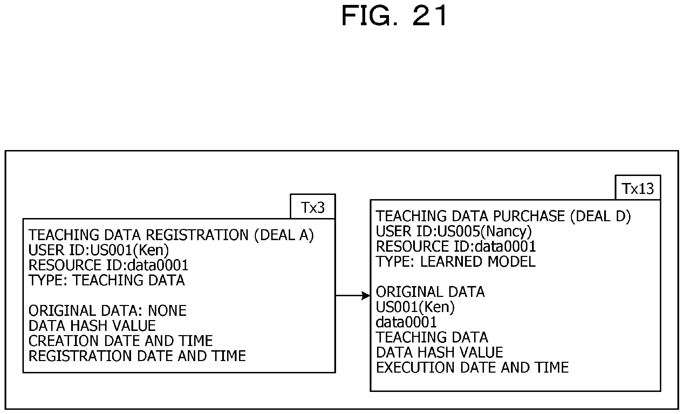

(Processing 8e) The information processing device 100 outputs information of connecting each of the transactions Tx as a trace forward processing result based on the trace forward information 41-2 generated in (processing 7e). FIG. 21 illustrates an example of the trace forward processing result. The transaction Tx13 is connected as a child of the transaction Tx3, as illustrated in FIG. 21. The transactions Tx5, Tx9, and Tx15 have been deleted, reflecting the processing of canceling the deal B.

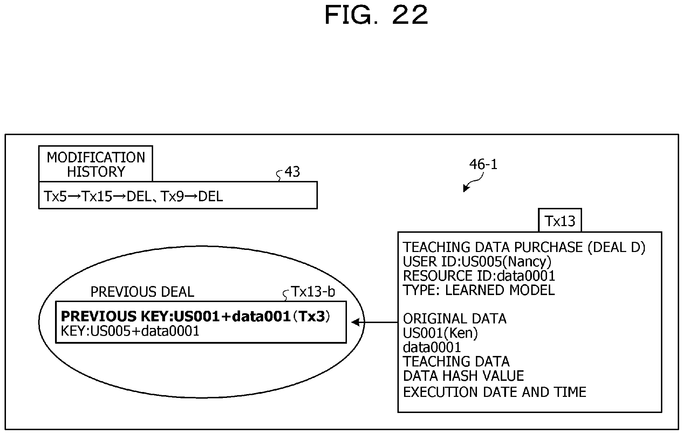

Next, traceback executed by the information processing device according to the present embodiment will be described. FIGs. 22 to 23 are diagrams for describing traceback executed by the information processing device according to the present embodiment. First, a series of processing (processing 1f) to (processing 6f) and (processing 1g) to (processing 5g) of the traceback executed by the information processing device 100 will be described in order with reference to FIG. 19.

(Processing 1f) The information processing device 100 receives a key of a base point of the traceback from the terminal device 5. As an example, a case of receiving "US005 + data0001" as the key of the base point will be described. The information processing device 100 compares the key of the base point "US005 + data0001" with the transaction management information 42, and acquires the transaction ID "Tx13" serving as the base point and the latest transaction ID "Tx19".

(Processing 2f) The information processing device 100 determines that the deal content of the transaction Tx13 is valid content because the key "US005 + data0001" that is a combination of the user ID and the resource ID of the transaction Tx13 matches the key of the base point. When the respective keys do not match, the information processing device 100 interrupts the subsequent processing.

(Processing 3f) The information processing device 100 acquires the key "Tx19" of the last modification history and the hash value of the modification history from the region Tx19-d of the latest transaction Tx19 specified in (processing 1f).

(Processing 4f) When the hash value acquired in (processing 3f) matches the hash value of the modification history 43, the information processing device 100 determines that the modification history 43 is valid content. The information processing device 100 acquires the modification history 43 when the respective hash values match. when the respective hash values do not match, the information processing device 100 traces the previously modified Tx of the transaction Tx19 to restore the modification history 43.

(Processing 5f) Description of FIG. 22 will be made. The information processing device 100 specifies that the transaction Tx13 serving as the base point has not been modified based on the modification history 43 acquired in (processing 4f). The information processing device 100 generates traceback information 46-1 having the transaction Tx13. The information processing device 100 refers to the region Tx13-b of the transaction Tx13 and specifies the transaction Tx3 of the previous key "US001 + data0001".

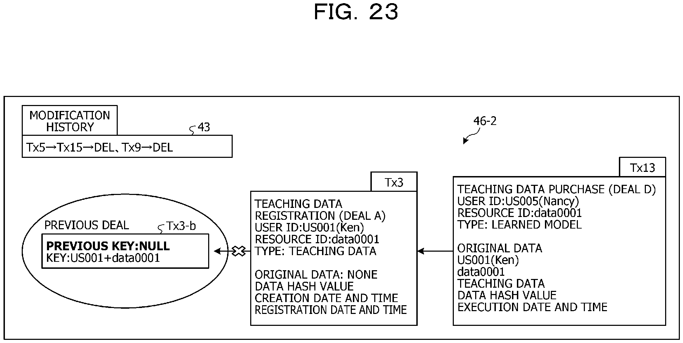

(Processing 6f) Description of FIG. 23 will be made. The information processing device 100 specifies that the transaction Tx3 has not been modified based on the modification history 43 acquired in (processing 4f). The information processing device 100 adds the transaction Tx3 to the traceback information 46-1 to generate traceback information 46-2. The information processing device 100 refers to the region Tx3-b of the transaction Tx3. Since the previous key is "NULL", the information processing device 100 terminates the traceback and outputs the traceback information 46-2.

(Processing 1g) The information processing device 100 receives a key of a base point of the traceback from the terminal device 5. As an example, a case of receiving a key of a base point "US002 + mdl0001" will be described. The information processing device 100 compares the key of the base point "US002 + mdl0001" with the transaction management information 42, and acquires the transaction ID "Tx9" serving as the base point and the latest transaction ID "Tx19".

(Processing 2g) The information processing device 100 determines that the deal content of the transaction Tx9 is valid content because the key "US002 + mdl0001" that is a combination of the user ID and the resource ID of the transaction Tx9 matches the key of the base point. When the respective keys do not match, the information processing device 100 interrupts the subsequent processing.

(Processing 3g) The information processing device 100 acquires the key "Tx19" of the last modification history and the hash value of the modification history from the region Tx19-d of the latest transaction Tx19 specified in (processing 1g).

(Processing 4g) When the hash value acquired in (processing 3g) matches the hash value of the modification history 43, the information processing device 100 determines that the modification history 43 is valid content. The information processing device 100 acquires the modification history 43 when the respective hash values match. When the respective hash values do not match, the information processing device 100 traces the previously modified Tx of the transaction Tx19 to restore the modification history 43.

(Processing 5g) The information processing device 100 specifies that the transaction Tx9 serving as the base point has been deleted based on the modification history 43 acquired in (processing 4g). The information processing device 100 outputs information indicating that the transaction Tx9g has been deleted.

As described above, in the case of receiving the information of the deal to be modified, the information processing device 100 generates the transaction corresponding to the deal to be modified and registers the transaction in the blockchain 40a. The information processing device 100 registers the relationship between the deal before modification and the deal after modification in the modification history 43 based on the key of the deal to be modified and the transaction management information 42.

Furthermore, in the case of receiving the information of the deal to be deleted, the information processing device 100 generates the transaction regarding deletion and registers the transaction in the blockchain 40a. The information processing device 100 registers the deleted transaction information in the modification history 43.

The information processing device 100 registers the hash value of the modification history 43 in the transaction of the blockchain 40a in order to ensure reliability. The information processing device 100 updates the trace forward information 41 and the transaction management information 42, calculates the hash value of each information, and registers the hash value in the transaction of the blockchain 40a each time generating the transaction and registering the transaction in the blockchain 40a.

Thereby, the information processing device 100 can efficiently refer to the modification history and data even in the case where the deal information registered in the blockchain has been modified.

For example, in the case of acquiring the information of the deal serving as the base point, the information processing device 100 can detect a series of transactions reflecting modification and deletion on the basis of the trace forward information 41 and the modification history 43 verified using the hash value. Furthermore, even in the case of executing a feedback, the information processing device 100 can also detect a series of transactions reflecting the modification and deletion by using the modification history 43.

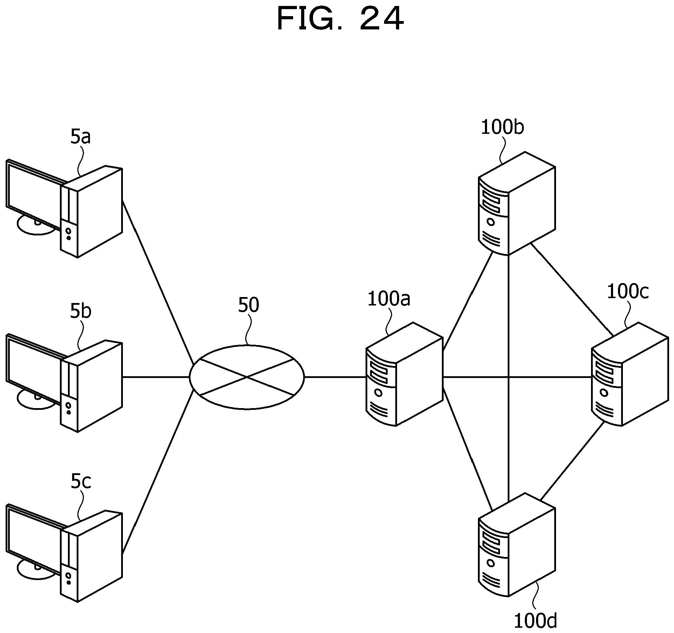

Next, an example of a system including the terminal device and the information processing device described with reference to FIGs. 6 to 23 will be described. FIG. 24 is a diagram illustrating a configuration of a system according to the present embodiment. As illustrated in FIG. 24, this system includes terminal devices 5a, 5b, 5c and information processing devices 100a, 100b, 100c, 100d. The information processing devices 100a to 100d are each connected to one another. The terminal devices 5a to 5c and the information processing devices 100a to 100d are connected via a network 50. In the following description, the terminal devices 5a to 5c are collectively referred to as terminal device(s) 5 unless otherwise specified. The information processing devices 100a to 100d are collectively referred to as information processing device(s) 100.

The terminal device 5 is a terminal device used by a user who performs each deal. For example, in the case of receiving the information informing that a deal has occurred by the user's operation, the terminal device 5 displays the screens 10A to 10C and the like illustrated in FIGs. 1 to 4. The user operates the terminal device 5 and inputs the user ID, the resource ID, the original user ID, the original resource ID, and the like. The terminal device 5 transmits the information (deal information) input by the user to the information processing device 100.

When receiving information informing that the deal is to be modified by the operation of the user, the terminal device 5 displays the screen 10B' and the like illustrated in FIG. 8. The user operates the terminal device 5 to transmit information regarding the modified deal to the information processing device 100.

When receiving information informing that the deal is to be deleted by the operation of the user, the terminal device 5 displays the screen 15B and the like illustrated in FIG. 16. The user operates the terminal device 5, inputs the information of the deal to be deleted, and transmits the information of the deal to be deleted to the information processing device 100.

In the case of tracing a transaction, the user operates the terminal device 5 and inputs various types of information regarding a trace request. The terminal device 5 transmits trace request information to the information processing device 100. The trace request information includes a user ID that is the key of the base point and a resource ID. Furthermore, the trace request information includes information indicating whether to perform an upstream trace (trace forward) or a downstream trace (traceback). In the case of acquiring a trace request result from the information processing device, the terminal device 5 displays the trace request result.

Each time receiving information of a deal from the terminal device 5, the information processing device 100 registers a deal corresponding to the deal in the blockchain 40a, and generates and registers the trace forward information 41 and the transaction management information 42 in the world state 40b.

In the case of receiving the information of the deal to be modified, the information processing device 100 generates the transaction corresponding to the deal to be modified and registers the transaction in the blockchain 40a. The information processing device 100 registers the relationship between the deal before modification and the deal after modification in the modification history 43 based on the key of the deal to be modified and the transaction management information 42.

Furthermore, in the case of receiving the information of the deal to be deleted, the information processing device 100 generates the transaction regarding deletion and registers the transaction in the blockchain 40a. The information processing device 100 registers the deleted transaction information in the modification history 43.

Here, the information processing device 100 registers the hash value of the modification history 43 in the transaction of the blockchain 40a in order to ensure reliability. Furthermore, the information processing device 100 calculates the hash value of the trace forward information 41 and registers the hash value in the transaction of the blockchain 40a each time generating the transaction and registering the transaction in the blockchain 40a.

Next, an example of a configuration of the information processing device 100 according to the present embodiment will be described. Here, as an example, the configuration of the information processing device 100a will be described. However, the information processing devices 100b to 100d are similar to the information processing device 100a in configuration.

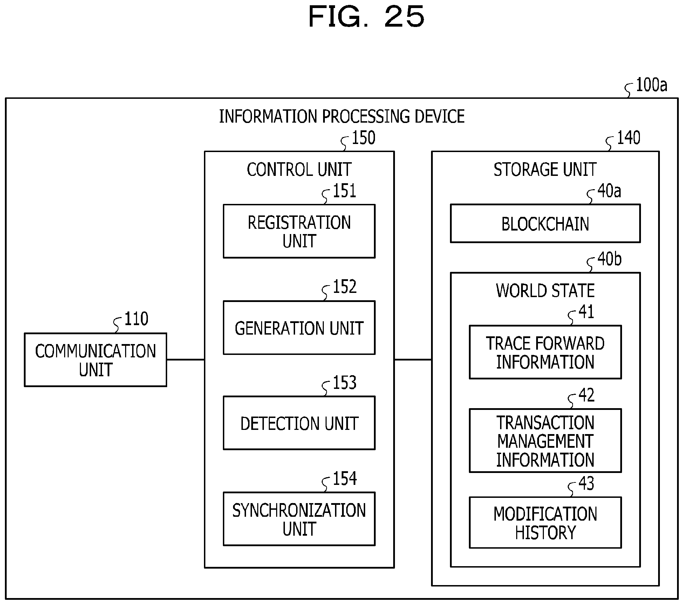

FIG. 25 is a functional block diagram illustrating the configuration of the information processing device according to the present embodiment. As illustrated in FIG. 25, the information processing device 100a includes a communication unit 110, a storage unit 140, and a control unit 150. Although not illustrated, the information processing device 100 may be connected to an input device for inputting various types of information and a display device for displaying various types of information.

The communication unit 110 is a processing unit that executes data communication with the terminal device 5 via the network 50. The control unit 150 to be described below exchanges data with the terminal device 5 via the communication unit 110. The communication unit 110 corresponds to a communication device.

The storage unit 140 includes the blockchain 40a and the world state 40b. The storage unit 140 corresponds to a semiconductor memory element such as a random access memory (RAM) and a flash memory, or a storage device such as a hard disk drive (HDD).

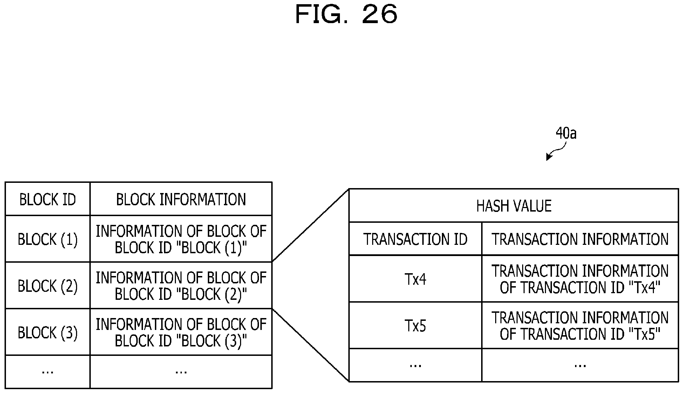

The blockchain 40a is a database in which a plurality of blocks is concatenated. FIG. 26 is a diagram illustrating an example of a data structure of a blockchain. As illustrated in FIG. 26, the blockchain 40a associates a block ID with block information. The block ID is information that uniquely identifies a block. The block information is the information of the block identified by the block ID.

Each block information of the blockchain 40a includes a hash value, a transaction ID, and transaction information. The hash value is the hash value of the immediately preceding block information. The transaction ID is information that uniquely identifies a transaction. The transaction information is information of the transaction identified by the transaction ID. The transaction information of the transaction ID "Txn" includes information regarding region Txn-a, a region Txn-b, a region Txn-c, and a region Txn-d. As described above, the region Txn-a is a region for registering the user ID, the resource ID, and the like. The region Txn-b is a region for registering the previous key, the key that is a combination of the current user ID and the resource ID, and the like. The region Txn-c is a region for registering the latest trace forward, the previous trace, the trace forward information, the hash value, and the like. The region Txn-d is a region for registering the hash values of pre-modification, previous modification, latest modification history, and modification history, and the like.

The world state 40b includes information of trace forward information 41, transaction management information 42, and modification history 43. The trace forward information 41, the transaction management information 42, and the modification history 43 respectively correspond to the trace forward information 41, the transaction management information 42, and the modification history 43 illustrated in FIGs. 8, 16, and the like.

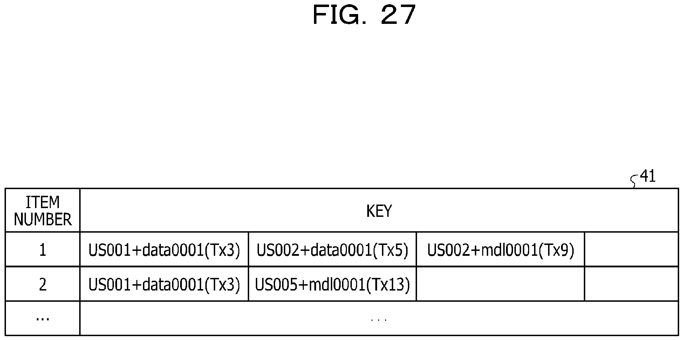

The trace forward information 41 is information indicating a parent-child relationship of transactions. FIG. 27 is a diagram illustrating an example of a data structure of the trace forward information. As illustrated in FIG. 27, for example, in the trace forward information 41, an item number and the key of each transaction are associated with each other, and the parent-child relationship is illustrated in the order of the keys.

For example, when describing a record of the item number "1", the record indicates that the child of the transaction Tx3 of the key "US001 + data0001" is the transaction Tx5 of the key "US002 + data0001". Furthermore, the record indicates that the child of the transaction Tx5 of the key "US002 + data0001" is the transaction Tx9 of the key "US002 + mdl0001". As described above, the key is a combination of the user ID and the resource ID set in a transaction.

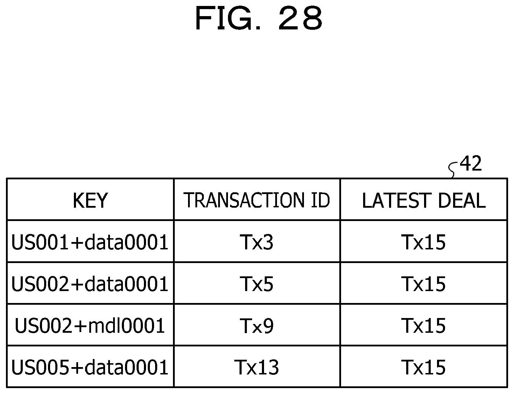

The transaction management information 42 is information indicating the relationship among a key, a transaction corresponding to the key, and a latest transaction. FIG. 28 is a diagram illustrating an example of a data structure of the transaction management information. As illustrated in FIG. 28, for example, the transaction management information 42 associates a key, a transaction ID, and latest deal. The key indicates the key set in the transaction. The transaction ID is information that uniquely identifies the transaction. The latest deal indicates the transaction ID of the latest deal.

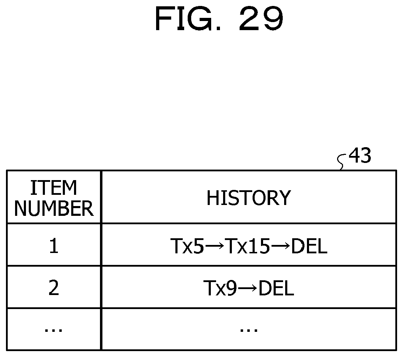

The modification history 43 holds information of a modification history of a transaction. FIG. 29 is a diagram illustrating an example of a data structure of the modification history. As illustrated in FIG. 29, for example, the modification history 43 associates an item number with a history. Describing the record of the item number "1", information indicating that the transaction Tx5 has been modified by the transaction Tx15, and then the transactions Tx5 and Tx15 have been deleted is registered. Describing a record of an item number "2", information indicating that the transaction Tx9 has been deleted is registered.

The description returns to FIG. 25. The control unit 150 includes a registration unit 151, a generation unit 152, a detection unit 153, and a synchronization unit 154. The control unit 150 can be implemented by a central processing unit (CPU), a micro processing unit (MPU), or the like. Furthermore, the control unit 150 may also be implemented by hard wired logic such as an application specific integrated circuit (ASIC) and a field programmable gate array (FPGA).

The registration unit 151 is a processing unit that generates, when a deal occurs, a transaction corresponding to the deal and registers the transaction in the blockchain 40a. Processing of registering the transaction in the blockchain 40a performed by the registration unit 151 corresponds to the registration processing of the reference device described in FIGs. 1 to 4.

First, the processing of the registration unit 151 when the first deal has occurred will be described. When the first deal has occurred, the registration unit 151 acquires the user ID and the resource ID input on the screen of the terminal device 5 and generates a transaction (transaction information). As mentioned above, the transaction includes the region Txn-a, region Txn-b, region Txn-c, and region Txn-d. Assuming that the deal corresponding to the first deal is the transaction Tx3, the registration unit registers the information illustrated in the region Tx3-a, region Tx3-b, region Tx3-c, and region Tx3-d in FIG. 7 in the transaction Tx3.

The registration unit 151 registers the transaction ID of the generated transaction and the transaction in the block information of the blockchain 40a.

Furthermore, the registration unit 151 registers the key that is a combination of the user ID and the resource ID and the generated transaction ID in the transaction management information 42.

Next, processing of the registration unit 151 when a deal that refers to a previous deal has occurred will be described. The registration unit 151 acquires the user ID, the resource ID, the original user ID, and the original resource ID input on the screen of the terminal device 5 and generates a transaction. Assuming that the transaction of the deal that refers to the previous deal is the transaction Tx5, the registration unit 151 registers the information illustrated in the region Tx5-a, region Tx5-b, region Tx5-c, and region Tx5-d in FIG. 7 in the transaction Tx5.

The registration unit 151 registers the transaction ID of the generated transaction and the transaction in the block information of the blockchain 40a.

Furthermore, the registration unit 151 registers the key that is a combination of the user ID and the resource ID and the generated transaction ID in the transaction management information 42. The registration unit 151 generates the trace forward information 41 and registers the hash value of the trace forward information 41 in the region Txn-c.

In the case of receiving the information of the deal to be modified, the generation unit 152 executes processing of newly generating a transaction corresponding to the deal to be modified, and registering the transaction in the blockchain 40a to generate the modification history 43. It is assumed that the information of the deal to be modified includes modified content. The newly generated transaction inherits the data of the transaction of the deal to be modified, and becomes a transaction in which the received modification part (the information in the region Txn-a) has been modified. Furthermore, the fact that the newly generated transaction is the replacement of the transaction of the deal to be modified is registered in the modification history 43.

For example, the processing of registering a new transaction in the blockchain 40a to generate the modification history 43 by the generation unit 152 corresponds to the above-described processing (processing 1a) to (processing 9a).

Furthermore, in the case of receiving a request to delete a deal, the generation unit 152 executes processing of newly generating a transaction corresponding to the deal to be deleted, and registering the transaction in the blockchain 40a to update (generate) the modification history 43. The generation unit 152 specifies a plurality of transactions to be deleted on the basis of the key of the deal to be deleted and the trace forward information 41. For example, the generation unit 152 specifies a transaction that is a descendant of the transaction of the deal to be deleted and has no ancestor transaction other than the transaction of the deal to be deleted as the transaction to be deleted. Furthermore, the deleted transaction ID is registered in the modification history 43.

The processing of registering a new transaction in which information regarding deletion is recorded in the blockchain 40a to update (generate) the modification history 43 by the generation unit 152 corresponds to the above-described processing (processing 1d) to (processing 8d).

The detection unit 153 is a processing unit that executes trace forward in the case of receiving a trace forward request from the terminal device 5. The detection unit 153 verifies the trace forward information 41 and the modification history 43 using the latest hash value. The detection unit 153 generates the latest trace forward information based on the verified trace forward information 41 and the modification history 43, and connects each of the transactions on the basis of the latest trace forward information. For example, the latest trace forward information corresponds to the trace forward information 41-2 in FIG. 11.

The trace forward processing executed by the detection unit 153 corresponds to the above-described processing (processing 1b) to (processing 8b) or (processing 1e) to (processing 8e). The detection unit 153 transmits the trace forward result to the terminal device 5.

Furthermore, in a case of receiving a traceback request, the detection unit 153 executes traceback. The detection unit 153 verifies the modification history using the latest hash value. The detection unit 153 executes traceback by tracing the parent transaction from the base point transaction based on the verified modification history 43.

The traceback processing executed by the detection unit 153 corresponds to the above-described processing (processing 1c) to (processing 7c), (processing 1f) to (processing 6f), and (processing 1g) to (processing 5g). The detection unit 153 transmits a traceback result to the terminal device 5.

The synchronization unit 154 is a processing unit that executes synchronous processing for the blockchain 40a and the world state 40b registered in the storage unit 140 among the information processing devices 100b to 100d connected to the information processing device 100a. The synchronization unit 154 may execute the synchronization processing periodically or may perform the synchronization processing when the blockchain 40a is updated.

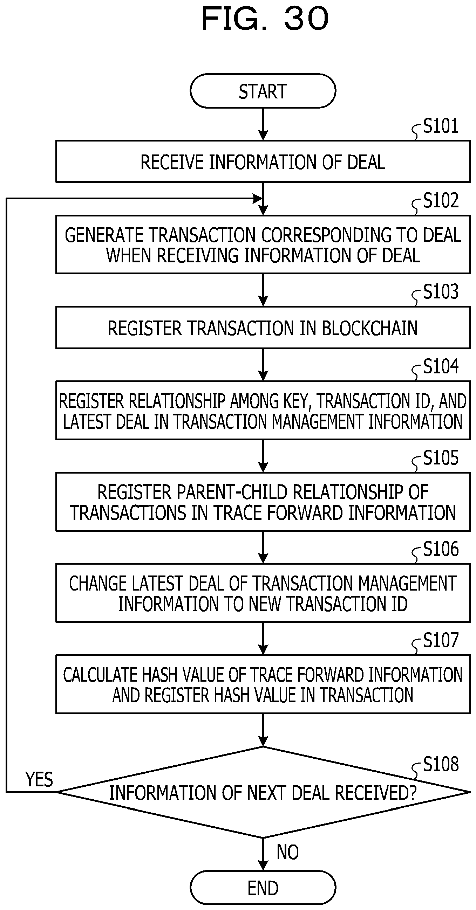

Next, an example of a processing procedure of the information processing device 100 according to the present embodiment will be described. FIG. 30 is a flowchart illustrating registration processing executed by the information processing device according to the present embodiment. As illustrated in FIG. 30, the registration unit 151 of the information processing device 100 receives information of a deal from the terminal device 5 (step S101). In the case of receiving the information of a deal, the registration unit 151 generates a transaction corresponding to the deal (step S102).

The registration unit 151 registers the transaction in the blockchain 40a (step S103). The registration unit 151 registers the relationship between the key and the transaction ID, and the latest deal in the transaction management information 42 (step S104).

The registration unit 151 registers the parent-child relationship of transactions in the trace forward information 41 (step S105). The generation unit 152 changes the latest information of the transaction management information 42 to a new transaction ID (step S106). The registration unit 151 calculates the hash value of the trace forward information 41 and registers the hash value in the transaction (step S107).

In the case of receiving information of a next deal from the terminal device 5 (step S108, Yes), the registration unit 151 proceeds to step S102. In the case of not receiving the information of a next deal from the terminal device 5 (step S108, No), the registration unit 151 terminates the processing.

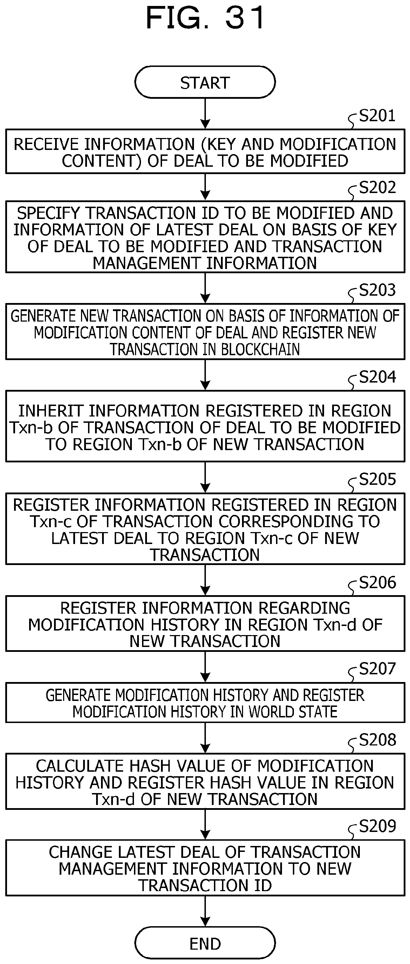

Next, an example of processing in a case where the information processing device 100 receives information of a deal to be modified will be described. FIG. 31 is a flowchart illustrating a processing procedure when the information processing device according to the present embodiment receives information of a deal to be modified. The generation unit 152 of the information processing device 100 receives information (key and modification content) of the deal to be modified from the terminal device 5 (step S201).

The generation unit 152 specifies the transaction ID to be modified and the latest deal information based on the key of the deal to be modified and the transaction management information 42 (step S202). The generation unit 152 generates a new transaction based on the information of the modification content of the deal and registers the transaction in the blockchain 40a (step S203).

The generation unit 152 inherits the information registered in the region Txn-b of the transaction of the deal to be modified to the region Txn-b of the new transaction (step S204). The generation unit 152 registers the information registered in the region Txn-c of the transaction corresponding to the latest deal in the region Txn-c of the new transaction (step S205).

The generation unit 152 registers information regarding the modification history (pre-modified TxID, previously modified Tx, and latest modification history) in the region Txn-d of the new transaction (step S206). The generation unit 152 generates the modification history 43 and registers the modification history 43 in the world state 40b (step S207).

The generation unit 152 calculates the hash value of the modification history 43 and registers the hash value in the region Txn-d of the new transaction (step S208). The generation unit 152 changes the latest deal of the transaction management information 42 to a new transaction ID (step S209).

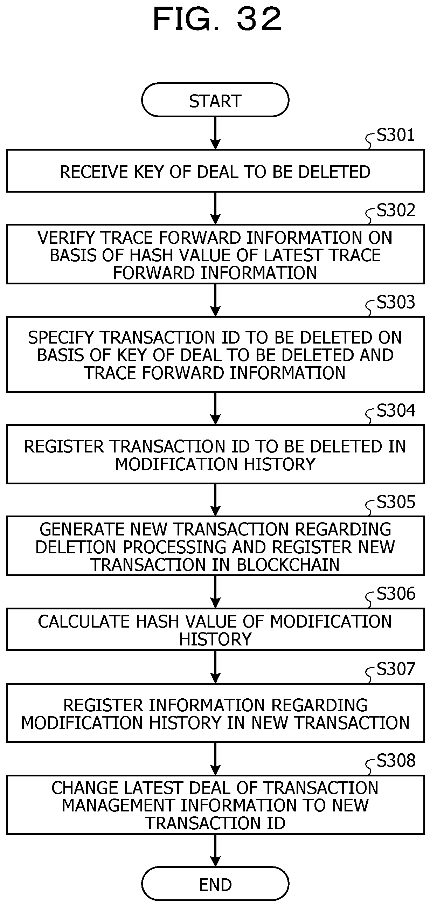

Next, an example of processing in a case where the information processing device 100 receives information of a deal to be deleted will be described. FIG. 32 is a flowchart illustrating a processing procedure when the information processing device according to the present embodiment receives information of a deal to be deleted. The generation unit 152 of the information processing device 100 receives a key of a deal to be deleted (step S301).

The generation unit 152 verifies the trace forward information 41 based on the hash value of the latest trace forward information 41 (step S302). The generation unit 152 specifies a transaction ID to be deleted based on the key of the deal to be deleted and the trace forward information 41 (step S303).

The generation unit 152 registers the transaction ID to be deleted in the modification history 43 (step S304). The generation unit 152 generates a new transaction regarding the deletion processing and registers the transaction in the blockchain 40a (step S305).

The generation unit 152 calculates the hash value of the modification history 43 (step S306). The generation unit 152 registers information regarding the modification history (pre-modified TxID, previously modified Tx, latest modification history, and modification history hash value) in the new transaction (step S307). The generation unit 152 changes the latest deal of the transaction management information 42 to a new transaction ID (step S308).

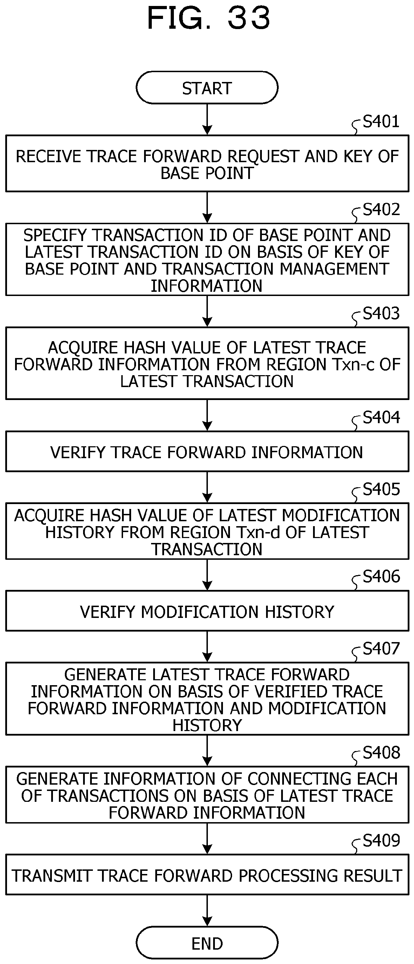

Next, an example of processing of executing trace forward by the information processing device 100 will be described. FIG. 33 is a flowchart illustrating a processing procedure of trace forward executed by the information processing device according to the present embodiment. The detection unit 153 of the information processing device 100 receives the trace forward request and the key of the base point from the terminal device 5 (step S401).

The detection unit 153 specifies the transaction ID of the base point and the latest transaction ID based on the key of the base point and the transaction management information 42 (step S402). The detection unit 153 acquires the hash value of the latest trace forward information from the region Txn-c of the latest transaction (step S403).

The detection unit 153 verifies the trace forward information 41 (step S404). The detection unit 153 acquires the hash value of the latest modification history from the region Txn-d of the latest transaction (step S405). The detection unit 153 verifies the modification history 43 (step S406).

The detection unit 153 generates the latest trace forward information based on the verified trace forward information 41 and modification history 43 (step S407). The detection unit 153 generates information of connecting each of the transactions based on the latest trace forward information (step S408). The detection unit 153 transmits a trace forward processing result to the terminal device 5 (step S409).

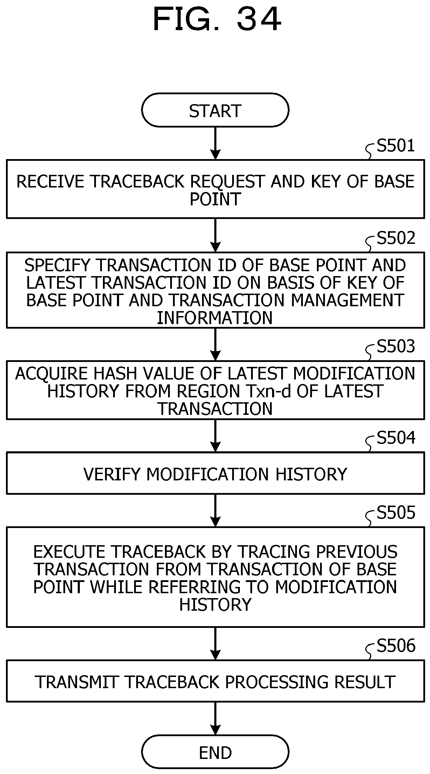

Next, processing of traceback executed by the information processing device 100 will be described. FIG. 34 is a flowchart illustrating a processing procedure of traceback executed by the information processing device according to the present embodiment. The detection unit 153 of the information processing device 100 receives the traceback request and the key of the base point from the terminal device 5 (step S501). The detection unit 153 specifies the transaction ID of the base point and the latest transaction ID based on the key of the base point and the transaction management information 42 (step S502).

The detection unit 153 acquires the hash value of the latest modification history from the region Txn-d of the latest transaction (step S503). The detection unit 153 verifies the modification history 43 (step S504).

The detection unit 153 executes traceback by tracing a previous transaction from the transaction of the base point while referring to the modification history (step S505). The detection unit 153 transmits a traceback processing result to the terminal device 5.

Next, effects of the information processing device 100 according to the present embodiment will be described. When receiving information of a deal to be modified, the information processing device 100 generates a new transaction corresponding to the modification content, registers the new transaction in the blockchain 40a, and registers the relationship between the pre-modified transaction ID and the modified transaction ID in the modification history 43. Thereby, the transaction of the pre-modified deal can be replaced with the transaction of the modified deal, and the transaction of the pre-modified deal can be substantially modified. That is, the modification history and data can be efficiently referred even in the case where the deal information registered in the blockchain has been modified.

When receiving information of a deal to be deleted, the information processing device 100 generates a new transaction regarding deletion, registers the new transaction in the blockchain 40a, and records the transaction ID to be deleted in the modification history 43. Thereby, the transaction of the deal to be deleted can be substantially deleted.

In the case of receiving the trace forward request and the key of the base point, the information processing device 100 specifies the parent-child relationship of transactions corresponding to a base point event based on the key information and the trace forward information 41, modifies the specified parent-child relationship using the modification history 43, and specifies a transaction corresponding to the modified parent-child relationship. Thereby, the trace forward can be executed while reflecting modification and deletion.

In the case of receiving the traceback request and the key of the base point, the information processing device 100 specifies the transaction of the base point based on the key and the transaction management information 42, and in the case of performing traceback based on information of a previous transaction set to the specified transaction, the information processing device 100 continues the traceback in the case where the previous transaction has not been deleted based on the modification history 43. Thereby, the traceback can be executed while reflecting deletion (reflection modification on the basis of the modification history).

The information processing device 100 registers in advance the hash value of the trace forward information 41 and the hash value of the modification history 43 in the latest transaction of the blockchain 40a and verifies the trace forward information 41 and the modification history 43 using each of the registered hash values. Thereby, the modification history and data can be efficiently referred even in the case where the deal information registered in the blockchain has been modified while ensuring the reliability.

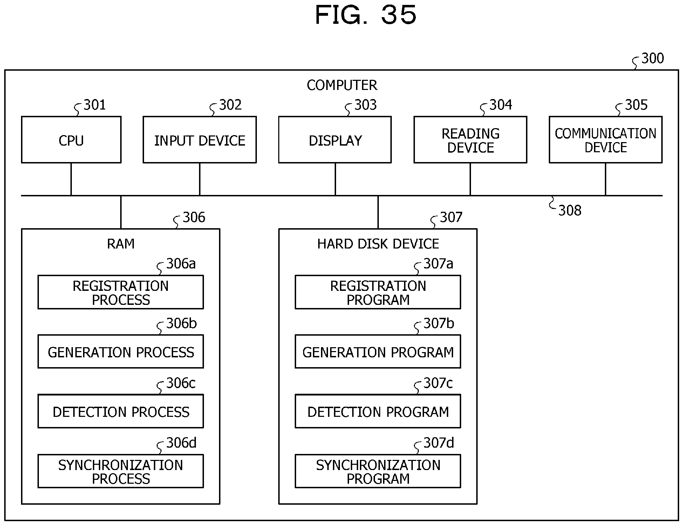

Next, an example of a hardware configuration of a computer that implements functions similar to those of the information processing device 100 described in the present embodiment will be described. FIG. 35 is a diagram illustrating an example of a hardware configuration of a computer that implements functions similar to those of a detection device according to the present embodiment.

As illustrated in FIG. 35, a computer 300 includes a CPU 301 that executes various types of arithmetic processing, an input device 302 that receives data input from a user, and a display 303. Furthermore, the computer 300 includes a reading device 304 that reads a program and the like from a storage medium, and a communication device 305 that exchanges data with an external device or the like via a wired or wireless network. The computer 300 includes a RAM 306 that temporarily stores various types of information, and a hard disk device 307. Then, each of the devices 301 to 307 is connected to a bus 308.

The hard disk device 307 includes a registration program 307a, a generation program 307b, a detection program 307c, and a synchronization program 307d. The CPU 301 reads the registration program 307a, the generation program 307b, the detection program 307c, and the synchronization program 307d and expands them to the RAM 306.

The registration program 307a functions as a registration process 306a. The generation program 307b functions as a generation process 306b. The detection program 307c functions as a detection process 306c. The synchronization program 307d functions as a synchronization process 306d.

Processing of the registration process 306a corresponds to the processing of registration unit 151. Processing of the generation process 306b corresponds to the processing of the generation unit 152. Processing of the detection process 306c corresponds to the processing of the detection unit 153. Processing of the synchronization process 306d corresponds to the processing of the synchronization unit 154.

Note that each of the programs 307a to 307d may not need to be stored in the hard disk device 307 beforehand. For example, each of the programs may be stored in a "portable physical medium" such as a flexible disk (FD), a compact disc read only memory (CD-ROM), a digital versatile disc (DVD) disk, a magneto-optical disk, or an IC card to be inserted in the computer 300. Then, the computer 300 may read and execute each of the programs 307a to 307d.

## Claims

1. An information processing program in which a computer performs processing of:
when a first event has occurred, generating a first transaction corresponding to the first event and registering the generated first transaction in a blockchain;
generating transaction management information in which identification information for identifying the first transaction and first key information of the first event are associated;
generating trace forward information indicating a parent-child relationship of each transaction based on the first key information of the first event;
when a second key information of a second event to be modified and modification content are received, generating a second transaction corresponding to the modification content and registering the generated second transaction in the blockchain;
specifying first identification information indicating identification information corresponding to the second key information of the second event to be modified based on the second key information of the second event to be modified and the transaction management information; and
generating a modification history in which second identification information indicating identification information of the second transaction corresponding to the modification content and the first identification information are associated.

2. The information processing program according to claim 1, wherein the processing further includes:
when a third key information of an third event to be deleted is received, generating a third transaction regarding deletion, registering the generated third transaction in the blockchain;
specifying third identification information indicating identification information corresponding to the third key information of the third event to be deleted based on the third key information of the third event to be deleted and the transaction management information; and
registering, in the modification history, information indicating that a fourth transaction corresponding to the third identification information has been deleted.

3. The information processing program according to claim 1 or 2,
wherein
the processing further includes:
registering in advance a hash value of the trace forward information and a hash value of the modification history in a transaction of the blockchain; and
verifying the trace forward information and the modification history using each of the registered hash values.

4. The information processing program according to any of claims 1 to 3, wherein
the processing further includes:
when fourth key information of a base point event is received, specifying a parent-child relationship of a fifth transaction corresponding to the base point event based on the fourth key information and the trace forward information;
modifying the specified parent-child relationship using the modification history; and
specifying a sixth transaction corresponding to the modified parent-child relationship.

5. The information processing program according to any of claims 1 to 3, wherein
the processing further includes:
when fourth key information of a base point event is received, specifying a fifth transaction of the base point based on the fourth key information and the transaction management information; and
when traceback which is based on information of a previous transaction set to the specified transaction is performed, continuing the traceback when the previous transaction is not deleted or modifying the previous transaction when the previous transaction is modified, based on of the modification history.

6. An information processing method comprising:
when a first event has occurred, generating a first transaction corresponding to the first event and registering the generated first transaction in a blockchain;
generating transaction management information in which identification information for identifying the first transaction and first key information of the first event are associated;
generating trace forward information indicating a parent-child relationship of each transaction based on the first key information of the first event;
when a second key information of a second event to be modified and modification content are received, generating a second transaction corresponding to the modification content and registering the generated second transaction in the blockchain;
specifying first identification information indicating identification information corresponding to the second key information of the second event to be modified based on the second key information of the second event to be modified and the transaction management information; and
generating a modification history in which second identification information indicating identification information of the second transaction corresponding to the modification content and the first identification information are associated.

7. The information processing method according to claim 6, further comprising:
when a third key information of an third event to be deleted is received, generating a third transaction regarding deletion, registering the generated third transaction in the blockchain;
specifying third identification information indicating identification information corresponding to the third key information of the third event to be deleted based on the third key information of the third event to be deleted and the transaction management information; and
registering, in the modification history, information indicating that a fourth transaction corresponding to the third identification information has been deleted.

8. The information processing method according to claim 6 or 7, further comprising:
registering in advance a hash value of the trace forward information and a hash value of the modification history in a transaction of the blockchain; and
verifying the trace forward information and the modification history using each of the registered hash values.

9. The information processing method according to any of claims 6 to 8, further comprising:
when fourth key information of a base point event is received, specifying a parent-child relationship of a fifth transaction corresponding to the base point event based on the fourth key information and the trace forward information;
modifying the specified parent-child relationship using the modification history; and
specifying a sixth transaction corresponding to the modified parent-child relationship.

10. The information processing method according to any of claims 6 to 8, further comprising:
when fourth key information of a base point event is received, specifying a fifth transaction of the base point based on the fourth key information and the transaction management information; and
when traceback which is based on information of a previous transaction set to the specified transaction is performed, continuing the traceback when the previous transaction is not deleted or modifying the previous transaction when the previous transaction is modified, based on of the modification history.

11. An information apparatus comprising:
a registration unit configured to:
generate, when a first event has occurred, a first transaction corresponding to the first event, and
register the generated first transaction in a blockchain; and
a generation unit configured to:
generate transaction management information in which identification information for identifying the first transaction and first key information of the first event are associated,
generate trace forward information indicating a parent-child relationship of each transaction based on the first key information of the first event,
generate, when a second key information of a second event to be modified and modification content are received, a second transaction corresponding to the modification content,
register the generated second transaction in the blockchain,
specify first identification information indicating identification information corresponding to the second key information of the second event to be modified based on the second key information of the second event to be modified and the transaction management information, and
generate a modification history in which second identification information indicating identification information of the second transaction corresponding to the modification content and the first identification information are associated.

12. The information processing apparatus according to claim 11, wherein the generation unit is further configured to:
generate, when a third key information of an third event to be deleted is received, a third transaction regarding deletion,
register the generated third transaction in the blockchain,
specify third identification information indicating identification information corresponding to the third key information of the third event to be deleted based on the third key information of the third event to be deleted and the transaction management information, and
register, in the modification history, information indicating that a fourth transaction corresponding to the third identification information has been deleted.

13. The information processing apparatus according to claim 11 or 12, wherein
the registration unit is further configured to:
register in advance a hash value of the trace forward information and a hash value of the modification history in a transaction of the blockchain, and
verify the trace forward information and the modification history using each of the registered hash values.

14. The information processing apparatus according to any of claims 11 to 13, further comprising:
a detection unit configured to:
specify, when fourth key information of a base point event is received, a parent-child relationship of a fifth transaction corresponding to the base point event based on the fourth key information and the trace forward information,
modify the specified parent-child relationship using the modification history, and
specify a sixth transaction corresponding to the modified parent-child relationship.

15. The information processing apparatus according to claims 11 to 13, further comprising:
a detection unit configured to:
specify, when fourth key information of a base point event is received, a fifth transaction of the base point based on the fourth key information and the transaction management information, and
when traceback which is based on information of a previous transaction set to the specified transaction is performed, continue the traceback when the previous transaction is not deleted or modify the previous transaction when the previous transaction is modified, based on of the modification history.
